# EUROPEAN PATENT APPLICATION

(11) **EP 4 401 341 A1**
(43) Date of publication of application: **17.07.2024**
(21) Application number: 22880253.4
(22) Date of filing: 10.10.2022
(51) Int. Cl.: H04B 17/382

(54) **CHANNEL INDICATION METHOD AND APPARATUS, AND READABLE STORAGE MEDIUM**

(30) Priority: 14.10.2021 CN 202111198701
(71) Applicant: Huawei Technologies Co., Ltd., Shenzhen, Guangdong 518129 (CN)
(72) Inventor: YU, Jian, Shenzhen, Guangdong 518129 (CN); GAN, Ming, Shenzhen, Guangdong 518129 (CN)
(74) Representative: Körber, Martin Hans
(86) International application number: PCT/CN2022/124299
(87) International publication number: WO 2023/061314

(57) **Abstract**

This application is applied to a wireless local area network that supports an 802.11 series standard; and relates to the wireless communication field, and in particular, to a channel indication method and apparatus, and a readable storage medium. The method includes: In an association process, a fixed client (STA) reports a channel use situation of the fixed client to an AP, for example, a specific channel on which there is an incumbent user (Incumbent users) and a specific channel on which there is no incumbent user. After receiving the channel use situation reported by the fixed client (STA), the AP stores such information, so that when data communication is to be performed subsequently, a channel on which the STA and the AP are allowed to perform transmission is selected for data communication, to reduce interference to the incumbent user.

## Description

This application claims priority to Chinese Patent Application No. 202111198701.7, filed with the China National Intellectual Property Administration on October 14, 2021 and entitled "CHANNEL INDICATION METHOD AND APPARATUS, AND READABLE STORAGE MEDIUM", which is incorporated herein by reference in its entirety.

### TECHNICAL FIELD

This application relates to the field of wireless communication technologies, and in particular, to a channel indication method and apparatus, and a readable storage medium.

### BACKGROUND

A wireless local area network (wireless local area network, WLAN) has been developed into several generations, including 802.11a/b/g, 802.11n, 802.11ac, 802.11ax, 802.11be that is currently being discussed, and the like. The 802.1 The standard is also referred to as an extremely high throughput (extremely high throughput, EHT) standard, Wi-Fi 7, or the like.

Recently, the federal communications commission issues a regulation on a 6 GHz (gigahertz, gigahertz) spectrum, defining different device types, bands (Bands) on which devices of different device types operate, a maximum effective isotropic radiated power (effective isotropic radiated power, EIRP), and a maximum EIPR power spectral density (power spectral density, PSD). For details, refer to a regulation on use of a 6 GHz unlicensed spectrum published by the federal communications commission. Details are not described herein.

However, there are some incumbent (Incumbent) users on the 6 GHz spectrum. As a "successor", an 802.11 device needs to be prevented from causing interference to the incumbent users. However, currently, how to prevent the 802.11 device from causing interference to the incumbent user is not resolved.

### SUMMARY

Embodiments of this application provide a channel indication method and apparatus, and a readable storage medium, so that an access point (access point, AP) or a station (station, STA) can learn of a subchannel on which another station (a geographical location at which the station is located) is forbidden to perform transmission or a subchannel on which another station (a geographical location at which the station is located) is allowed to perform transmission, to perform data transmission on a subchannel on which the two parties are allowed to perform transmission, and reduce interference to an incumbent user.

The following describes this application in different aspects. It should be understood that mutual reference may be made to the following implementations and beneficial effects of different aspects.

According to a first aspect, this application provides a channel indication method. The method includes: A first device sends a first request frame to a second device. The first request frame includes first indication information, to indicate a subchannel on which the first device is allowed to perform transmission and/or a subchannel on which the first device is forbidden to perform transmission in a first bandwidth. The first device receives a first response frame from a second device. The first bandwidth is a maximum channel bandwidth supported by the first device or a preset bandwidth, and the preset bandwidth is one of 320 MHz, 160 MHz, 80 MHz, 40 MHz, and 20 MHz. The first device is a station connected to a laws and regulations database, that is, a second type of device in Table 1: a fixed client.

In this application, "subchannel on which transmission is allowed" may also be understood as "non-punctured (non-punctured) subchannel", and correspondingly, "subchannel on which transmission is forbidden" may be understood as "punctured (punctured) subchannel". Therefore, the first indication information may also be understood as indicating a subchannel that is of the first device and that is non-punctured and/or a subchannel that is of the first device and that is punctured in the first bandwidth.

It should be understood that a channel on which the first device sends the first request frame is a channel (that is, a non-punctured channel) on which the first device is allowed to perform transmission in the first bandwidth.

Optionally, the maximum channel bandwidth supported by the first device is indicated by using an EHT physical capabilities information field (EHT PHY capabilities information field). For a specific indication manner and a specific meaning, refer to corresponding descriptions in the 802. 1The standard. Details are not described herein.

In this solution, a request frame carries indication information, to indicate a subchannel on which transmission is allowed and/or a subchannel on which transmission is forbidden, to help the second device more accurately learn of a channel use situation of the first device, for example, a specific channel on which transmission is allowed and a specific channel on which transmission is not allowed, so that when data communication is to be performed subsequently, a subchannel on which two communication parties (an AP and a STA, or STAs) are allowed to perform data communication is selected for data communication, to reduce interference to an incumbent user around the first device.

With reference to the first aspect, in a possible implementation, the first request frame is a probe request frame, and correspondingly, the first response frame is a probe response frame. After the first device receives the first response frame, the method further includes: The first device sends an association request frame to the second device; and the first device receives an association response frame from the second device, to complete an association between the first device and the second device.

In this solution, the channel indication method is applied to an active association process, to reuse the active association process, without a need to redesign a new process, to reduce a change to a standard protocol. An implementation thereof is simple.

With reference to the first aspect, in a possible implementation, the first request frame is an association request frame, and correspondingly, the first response frame is an association response frame. Before the first device sends the first request frame, the method further includes: The first device receives a beacon frame from the second device. The beacon frame includes an EHT operation element, the EHT operation element includes a disabled subchannel bitmap, and the disabled subchannel bitmap indicates a subchannel on which transmission is allowed and a subchannel on which transmission is forbidden in a basic service set (basic service set, BSS) bandwidth of the second device. The second device is an access point connected to the laws and regulations database, that is, a first type of device in Table 1: a standard-power access point controlled through automated frequency coordination (automated frequency coordination, AFC).

In this solution, the beacon frame carries the EHT operation element. Because the beacon frame is sent through broadcasting, and the disabled subchannel bitmap in the EHT operation element indicates the subchannel on which transmission is allowed and a subchannel on which transmission is forbidden in the BSS bandwidth of the second device, a STA (for example, a third type of device in Table 1: a client connected to the standard-power access point) around an AP may obtain a specific available subchannel and a specific unavailable subchannel even if the STA is not connected to the laws and regulations database, to reduce interference to the incumbent user. In addition, a fixed client (that is, the second type of device in Table 1) around the AP may also learn of a channel use situation of the AP, to select, with reference to a channel use situation of the fixed client for data transmission, a channel available to both the fixed client and the AP, and reduce interference to a surrounding incumbent user.

With reference to the first aspect, in a possible implementation, the first request frame is a pairing request frame, and the first response frame is a pairing response frame.

With reference to the first aspect, in a possible implementation, after the first device receives the first response frame, the method further includes: The first device sends a medium access control (medium access control, MAC) protocol data unit (MAC protocol data unit, MPDU). The MPDU is used to update the subchannel on which the first device is allowed to perform transmission and/or the subchannel on which the first device is forbidden to perform transmission in the first bandwidth. The MPDU includes third indication information. The third indication information indicates a subchannel on which the first device is allowed to perform transmission and/or a subchannel on which the first device is forbidden to perform transmission in the first bandwidth. The first device receives an acknowledgment frame. The third indication information may be an (updated) disabled subchannel bitmap. The subchannel on which transmission is allowed and that is indicated by the third indication information is different from the subchannel on which transmission is allowed and that is indicated by the first indication information (or a previously received disabled subchannel bitmap), and/or the subchannel on which transmission is forbidden and that is indicated by the third indication information is different from the subchannel on which transmission is forbidden and that is indicated by the first indication information (or the previously received disabled subchannel bitmap).

Optionally, the MPDU is further used to update a sector direction in which the first device is allowed to perform transmission and/or a sector direction in which the first device is forbidden to perform transmission in the first bandwidth. Therefore, the MPDU further includes third sector indication information. The third sector indication information is an (updated) sector bitmap. The third sector indication information indicates an (updated) sector direction in which the first device is allowed to perform transmission and/or an (updated) sector direction in which the first device is forbidden to perform transmission in the first bandwidth. The sector direction in which transmission is allowed and that is indicated by the third sector indication information is different from a sector direction in which transmission is allowed and that is indicated by first sector indication information (or a previously received sector bitmap), and/or the sector direction in which transmission is forbidden and that is indicated by the third sector indication information is different from a sector direction in which transmission is forbidden and that is indicated by the first sector indication information (or a previously received sector bitmap).

This solution provides a method in which the first device (station) notifies the second device that an available channel (or a channel in which transmission is allowed) and an available sector direction (or a sector direction in which transmission is allowed) are updated, so that the second device can learn of the channel use situation (a specific channel occupied by the incumbent user and a specific channel not occupied by the incumbent user) of the first device, to avoid a case in which when an available channel changes, the second device sends data to the first device or triggers the first device to send data on a channel on which the first device is not allowed to perform transmission and the first device cannot perform confirmation or data sending. In this way, waste of air interface resources can be reduced, and interference to the incumbent user can be reduced.

Optionally, the MPDU includes an action frame (Action frame), and the third indication information is located in an information element or a field of the action frame.

Optionally, the third indication information is located in an aggregated control (aggregated control, A-control) subfield of the MPDU. In this solution, the A-control field of the MPDU carries the updated subchannel on which transmission is forbidden and/or the updated sector bitmap, and may be transferred to the second device together with information such as data, to quickly transfer a changed available channel, and avoid interference to the incumbent user.

Optionally, the MPDU further includes a reason code field, and the reason code field indicates a reason why the first device updates the subchannel on which transmission is allowed and/or the subchannel on which transmission is forbidden in the first bandwidth. The reason may be one or more of a change in a registration situation of the incumbent user; powering on/off of the incumbent user, and a case in which the incumbent user performs registration at different time points; or may be that a radar signal is found on some channels, interference on some channels is large, or the like.

With reference to the first aspect, in a possible implementation, after the first device receives the first response frame, the method further includes: The first device receives a physical layer protocol data unit (physical layer protocol data unit, PPDU) on a first channel. The PPDU is used to schedule the first device to perform uplink data transmission, or the PPDU carries data to be sent to the first device. The first device parses the PPDU. The first channel is a channel in an intersection set of the subchannel on which transmission is allowed in the BSS bandwidth of the second device or the second bandwidth and the subchannel on which transmission is allowed in the first bandwidth. The first bandwidth is the maximum channel bandwidth supported by the first device or the preset bandwidth, and the second bandwidth is a maximum channel bandwidth supported by the second device or the preset bandwidth.

In this solution, when the second device and the first device perform data communication, channel use situations (the specific channel occupied by the incumbent user and the specific channel not occupied by the incumbent user) of two communication parties are both considered, and data transmission is allowed only on a channel on which the two parties are allowed to perform transmission, to reduce impact on the incumbent user.

According to a second aspect, this application provides a channel indication method. The method includes: A second device receives a first request frame from a first device. The first request frame includes first indication information, to indicate a subchannel on which the first device is allowed to perform transmission and/or a subchannel on which the first device is forbidden to perform transmission in a first bandwidth. The second device sends a first response frame to the first device. The first bandwidth is a maximum channel bandwidth supported by the first device or a preset bandwidth, and the preset bandwidth is one of 320 MHz, 160 MHz, 80 MHz, 40 MHz, and 20 MHz. The second device is an access point connected to a laws and regulations database, that is, a first type of device in Table 1: a standard-power access point controlled through AFC. Alternatively, the second device is a station other than the first device. The first device is a station connected to the laws and regulations database, that is, a second type of device in Table 1: a fixed client.

With reference to the second aspect, in a possible implementation, the first request frame is a probe request frame, and correspondingly, the first response frame is a probe response frame. After the second device sends the first response frame, the method further includes: The second device receives an association request frame from the first device; and the second device sends an association response frame to the first device, to complete an association between the first device and the second device. The second device is an access point connected to the laws and regulations database, that is, the first type of device in Table 1: the standard-power access point controlled through AFC.

With reference to the second aspect, in a possible implementation, the first request frame is an association request frame, and correspondingly, the first response frame is an association response frame. Before the second device receives the first request frame, the method further includes: The second device sends a beacon frame to the first device. The beacon frame includes an EHT operation element, the EHT operation element includes a disabled subchannel bitmap, and the disabled subchannel bitmap indicates a subchannel on which transmission is allowed and a subchannel on which transmission is forbidden in a BSS bandwidth of the second device. The second device is an access point connected to the laws and regulations database, that is, the first type of device in Table 1: the standard-power access point controlled through AFC.

It should be understood that a channel on which the second device sends the first response frame is a channel on which the second device is allowed to perform transmission (that is, a non-punctured channel) in a BSS bandwidth of the second device.

With reference to the second aspect, in a possible implementation, the first request frame is a pairing request frame, and the first response frame is a pairing response frame. The second device is a station other than the first device.

With reference to the second aspect, in a possible implementation, after the second device sends the first response frame, the method further includes: The second device receives an MPDU. The MPDU is used to update the subchannel on which the first device is allowed to perform transmission and/or the subchannel on which the first device is forbidden to perform transmission in the first bandwidth. The MPDU includes third indication information. The third indication information indicates a subchannel on which the first device is allowed to perform transmission and/or a subchannel on which the first device is forbidden to perform transmission in the first bandwidth. The second device sends an acknowledgment frame. The third indication information may be an (updated) disabled subchannel bitmap. The subchannel on which transmission is allowed and that is indicated by the third indication information is different from the subchannel on which transmission is allowed and that is indicated by the first indication information (or a previously received disabled subchannel bitmap), and/or the subchannel on which transmission is forbidden and that is indicated by the third indication information is different from the subchannel on which transmission is forbidden and that is indicated by the first indication information (or the previously received disabled subchannel bitmap). The acknowledgment frame is used to acknowledge that a corresponding information change has been received.

Optionally, the MPDU is further used to update a sector direction in which the first device is allowed to perform transmission and/or a sector direction in which the first device is forbidden to perform transmission in the first bandwidth. Therefore, the MPDU further includes third sector indication information. The third sector indication information is an (updated) sector bitmap. The third sector indication information indicates an (updated) sector direction in which the first device is allowed to perform transmission and/or an (updated) sector direction in which the first device is forbidden to perform transmission in the first bandwidth. The sector direction in which transmission is allowed and that is indicated by the third sector indication information is different from a sector direction in which transmission is allowed and that is indicated by first sector indication information (or a previously received sector bitmap), and/or the sector direction in which transmission is forbidden and that is indicated by the third sector indication information is different from a sector direction in which transmission is forbidden and that is indicated by the first sector indication information (or a previously received sector bitmap).

Optionally, the MPDU includes an action frame (Action frame), and the third indication information is located in an information element or a field of the action frame.

Optionally, the third indication information is located in an A-control subfield of the MPDU.

Optionally, the MPDU further includes a reason code field, and the reason code field indicates a reason why the first device updates the subchannel on which transmission is allowed and/or the subchannel on which transmission is forbidden in the first bandwidth.

With reference to the second aspect, in a possible implementation, after the second device sends the first response frame, the method further includes: The second device generates a PPDU, and sends the PPDU on the first channel. The PPDU is used to schedule the first device to perform uplink data transmission, or the PPDU carries data to be sent to the first device. The first channel is a channel in an intersection set of the subchannel on which transmission is allowed in the BSS bandwidth of the second device or the second bandwidth and the subchannel on which transmission is allowed in the first bandwidth. The first bandwidth is the maximum channel bandwidth supported by the first device or the preset bandwidth, and the second bandwidth is a maximum channel bandwidth supported by the second device or the preset bandwidth.

According to a third aspect, this application provides a communication apparatus. The communication apparatus may be a first device or a chip, for example, a Wi-Fi chip, in the first device. The communication apparatus includes: A transceiver unit, configured to send a first request frame. The first request frame includes first indication information, the first indication information indicates a subchannel on which the first device is allowed to perform transmission and/or a subchannel on which the first device is forbidden to perform transmission in a first bandwidth, the first bandwidth is a maximum channel bandwidth supported by the first device or a preset bandwidth, and the preset bandwidth is one of 320 MHz, 160 MHz, 80 MHz, 40 MHz, and 20 MHz. The transceiver unit is further configured to receive a first response frame. The first device is a station.

Optionally, the communication apparatus further includes a processing unit, configured to generate a first request frame.

Optionally, the maximum channel bandwidth supported by the first device is indicated by using an EHT PHY capabilities information field. For a specific indication manner and a specific meaning, refer to corresponding descriptions in the 802.11be standard. Details are not described herein.

With reference to the third aspect, in a possible implementation, the first request frame is a probe request frame, and correspondingly, the first response frame is a probe response frame. The transceiver unit is further configured to: send an association request frame; and receive an association response frame.

Optionally, the processing unit is further configured to generate the association request frame.

With reference to the third aspect, in a possible implementation, the first request frame is an association request frame, and correspondingly, the first response frame is an association response frame. The transceiver unit is further configured to receive a beacon frame. The beacon frame includes an EHT operation element, the EHT operation element includes a disabled subchannel bitmap, the disabled subchannel bitmap indicates a subchannel on which transmission is allowed and a subchannel on which transmission is forbidden in a basic service set BSS bandwidth of a second device, and the second device is an access point.

With reference to the third aspect, in a possible implementation, the first request frame is a pairing request frame, and correspondingly, the first response frame is a pairing response frame.

With reference to the third aspect, in a possible implementation, the transceiver unit is further configured to send an MPDU. The MPDU is used to update the subchannel on which the first device is allowed to perform transmission and/or the subchannel on which the first device is forbidden to perform transmission in the first bandwidth. The MPDU includes third indication information. The third indication information indicates a subchannel on which the first device is allowed to perform transmission and/or a subchannel on which the first device is forbidden to perform transmission in the first bandwidth. The subchannel on which transmission is allowed and that is indicated by the third indication information is different from the subchannel on which transmission is allowed and that is indicated by the first indication information, and/or the subchannel on which transmission is forbidden and that is indicated by the third indication information is different from the subchannel on which transmission is forbidden and that is indicated by the first indication information. The transceiver unit is further configured to receive an acknowledgment frame.

Optionally, the MPDU is further used to update a sector direction in which the first device is allowed to perform transmission and/or a sector direction in which the first device is forbidden to perform transmission in the first bandwidth. The MPDU further includes third sector indication information, to indicate a sector direction in which the first device is allowed to perform transmission and/or a sector direction in which the first device is forbidden to perform transmission in the first bandwidth. The sector direction in which transmission is allowed and that is indicated by the third sector indication information is different from a sector direction in which transmission is allowed and that is indicated by first sector indication information, and/or the sector direction in which transmission is forbidden and that is indicated by the third sector indication information is different from a sector direction in which transmission is forbidden and that is indicated by the first sector indication information.

Optionally, the MPDU includes an action frame (Action frame), and the third indication information is located in an information element or a field of the action frame.

Optionally, the third indication information is located in an A-control subfield of the MPDU.

Optionally, the MPDU further includes a reason code field, and the reason code field indicates a reason why the first device updates the subchannel on which transmission is allowed and/or the subchannel on which transmission is forbidden in the first bandwidth.

With reference to the third aspect, in a possible implementation, the transceiver unit is further configured to receive a PPDU on a first channel. The PPDU is used to schedule the first device to perform uplink data transmission, or the PPDU carries data to be sent to the first device. The first channel is a channel in an intersection set of the subchannel on which transmission is allowed in the BSS bandwidth of the second device or the second bandwidth and the subchannel on which transmission is allowed in the first bandwidth. The first bandwidth is the maximum channel bandwidth supported by the first device or the preset bandwidth, and the second bandwidth is a maximum channel bandwidth supported by the second device or the preset bandwidth. The processing unit is further configured to parse the PPDU.

According to a fourth aspect, this application provides a communication apparatus. The communication apparatus may be a second device or a chip, for example, a Wi-Fi chip, in the second device. The communication apparatus includes: a transceiver unit, configured to receive a first request frame. The first request frame includes first indication information, the first indication information indicates a subchannel on which a first device is allowed to perform transmission and/or a subchannel on which the first device is forbidden to perform transmission in a first bandwidth, the first bandwidth is a maximum channel bandwidth supported by the first device or a preset bandwidth, the preset bandwidth is one of 320 MHz, 160 MHz, 80 MHz, 40 MHz, and 20 MHz, and the first device is a station. The transceiver unit is further configured to send a first response frame. The second device is an access point or a station other than the first device.

Optionally, the communication apparatus further includes a processing unit, configured to generate a first response frame.

With reference to the fourth aspect, in a possible implementation, the first request frame is a probe request frame, and correspondingly, the first response frame is a probe response frame. The transceiver unit is further configured to: receive an association request frame; and send an association response frame. The second device is an access point.

Optionally, the processing unit is further configured to generate the association response frame.

With reference to the fourth aspect, in a possible implementation, the first request frame is an association request frame, and correspondingly, the first response frame is an association response frame. The transceiver unit is further configured to send a beacon frame. The beacon frame includes an EHT operation element, the EHT operation element includes a disabled subchannel bitmap, and the disabled subchannel bitmap indicates a subchannel on which transmission is allowed and a subchannel on which transmission is forbidden in a BSS bandwidth of the second device. The second device is an access point.

With reference to the fourth aspect, in a possible implementation, the first request frame is a pairing request frame, and correspondingly, the first response frame is a pairing response frame. The second device is a station other than the first device.

With reference to the fourth aspect, in a possible implementation, the transceiver unit is further configured to receive an MPDU. The MPDU is used to update the subchannel on which the first device is allowed to perform transmission and/or the subchannel on which the first device is forbidden to perform transmission in the first bandwidth. The MPDU includes third indication information. The third indication information indicates a subchannel on which the first device is allowed to perform transmission and/or a subchannel on which the first device is forbidden to perform transmission in the first bandwidth. The subchannel on which transmission is allowed and that is indicated by the third indication information is different from the subchannel on which transmission is allowed and that is indicated by the first indication information, and/or the subchannel on which transmission is forbidden and that is indicated by the third indication information is different from the subchannel on which transmission is forbidden and that is indicated by the first indication information. The transceiver unit is further configured to send an acknowledgment frame.

Optionally, the MPDU is further used to update a sector direction in which the first device is allowed to perform transmission and/or a sector direction in which the first device is forbidden to perform transmission in the first bandwidth. The MPDU further includes third sector indication information, to indicate a sector direction in which the first device is allowed to perform transmission and/or a sector direction in which the first device is forbidden to perform transmission in the first bandwidth. The sector direction in which transmission is allowed and that is indicated by the third sector indication information is different from a sector direction in which transmission is allowed and that is indicated by first sector indication information, and/or the sector direction in which transmission is forbidden and that is indicated by the third sector indication information is different from a sector direction in which transmission is forbidden and that is indicated by the first sector indication information.

Optionally, the MPDU includes an action frame (Action frame), and the third indication information is located in an information element or a field of the action frame.

Optionally, the third indication information is located in an A-control subfield of the MPDU.

Optionally, the MPDU further includes a reason code field, and the reason code field indicates a reason why the first device updates the subchannel on which transmission is allowed and/or the subchannel on which transmission is forbidden in the first bandwidth.

With reference to the fourth aspect, in a possible implementation, the processing unit is further configured to generate a PPDU. The PPDU is used to schedule the first device to perform uplink data transmission, or the PPDU carries data to be sent to the first device. The transceiver unit is further configured to send the PPDU on a first channel. The first channel is a channel in an intersection set of the subchannel on which transmission is allowed in the BSS bandwidth of the second device or the second bandwidth and the subchannel on which transmission is allowed in the first bandwidth. The first bandwidth is the maximum channel bandwidth supported by the first device or the preset bandwidth, and the second bandwidth is a maximum channel bandwidth supported by the second device or the preset bandwidth.

In a possible implementation of any one of the foregoing aspects, the first indication information is a bitmap, and a bit in the first indication information indicates whether the first device is allowed to perform transmission on a subchannel corresponding to the bit (or whether a subchannel corresponding to the bit is punctured). A bandwidth of the subchannel corresponding to a bit in the first indication information may be 20 MHz, 40 MHz, 80 MHz, or the like. A bandwidth granularity of the subchannel corresponding to the bit is not limited in this application.

In a possible implementation of any one of the foregoing aspects, the first request frame may further include one or more of the following information: a presence indication of the first indication information, first station type indication information, first sector indication information, and first sector presence indication. The presence indication of the first indication information is set to a first value (for example, 1), to indicate that the first indication information is present in the first request frame. The first station type indication information indicates a type of the first device, and the type of the first device is a type of a station connected to an AFC system, that is, a second type of device in Table 1: a fixed client. The first sector indication information indicates the sector direction in which the first device is allowed to perform transmission and/or the sector direction in which the first device is forbidden to perform transmission in the first bandwidth. The first sector presence indication indicates whether the first sector indication information is present in the first request frame.

Optionally, the first sector indication information is a bitmap, and a bit in the first sector indication information indicates whether the first device is allowed to perform transmission in a sector direction corresponding to the bit. Alternatively, the first sector indication information includes one or more sector identifiers, and the first device is allowed or forbidden to perform transmission in sector directions respectively identified by the one or more sector identifiers.

If the first request frame in this solution carries station type indication information, an AP (an access point connected to a laws and regulations database, that is, a first type of device in Table 1: a standard-power access point controlled through AFC) may learn that the first device is a fixed client, so that the first device can be limited by a higher ERIP and PSD, and have a larger transmission distance. In addition, if the first request frame in this solution carries sector indication information, when there is an incumbent user in some sector directions of a channel, the channel may still be used in the other sector directions, to improve spectrum efficiency/spectrum utilization.

In a possible implementation of any one of the foregoing aspects, the first response frame includes one or more of the following information: second indication information, a presence indication of the second indication information, second station type indication information, second sector indication information, and a second sector presence indication. The second indication information indicates a subchannel on which transmission is allowed and/or a subchannel on which transmission is forbidden in the BSS bandwidth of the second device, or the second indication information indicates a subchannel on which transmission is allowed and/or a subchannel on which transmission is forbidden in a second bandwidth. The presence indication of the second indication information indicates whether the second indication information is present in the first response frame. The second station type indication information indicates a type of the second device, and the type of the second device is one of a standard-power access point type, a type of a station connected to the standard-power access point, the type of the station connected to the AFC system, and a type of a station connected to a low-power access point. The second sector indication information indicates a sector direction in which transmission is allowed and/or a sector direction in which transmission is forbidden in the BSS bandwidth of the second device, or the second sector indication information indicates a sector direction in which transmission is allowed and/or a sector direction in which transmission is forbidden in the second bandwidth. The second sector presence indication indicates whether the second sector indication information is present in the first response frame. The second bandwidth is the maximum channel bandwidth supported by the second device or the preset bandwidth.

Optionally, the second sector indication information is a bitmap. A bit in the second sector indication information indicates whether the second device is allowed to perform transmission in a sector direction corresponding to the bit. The second sector indication information includes one or more sector identifiers, and the second device is allowed or forbidden to perform transmission in sector directions respectively identified by the one or more sector identifiers.

The second device in this solution may also notify the first device of a channel use situation of the second device, to reduce interference to an incumbent user around the second device.

In a possible implementation of any one of the foregoing aspects, the association request frame includes one or more of the following information: the first indication information, a presence indication of the first indication information, first station type indication information, first sector indication information, and a first sector presence indication. The presence indication of the first indication information is set to a first value, to indicate that the first indication information is present in the association request frame. The first station type indication information indicates a type of the first device, and the type of the first device is a type of a station connected to an AFC system. The first sector indication information indicates the sector direction in which the first device is allowed to perform transmission and/or the sector direction in which the first device is forbidden to perform transmission in the first bandwidth. The first sector presence indication indicates whether the first sector indication information is present in the association request frame.

In this solution, the association request frame may carry a channel use situation of the first device. When a subchannel on which transmission is forbidden changes in a period starting from a time point at which the first device sends the probe request frame to a time point at which the first device sends the association request frame, the first device may notify, in a timely manner, the second device that the subchannel on which the first device is forbidden to perform transmission changes, so that communication is subsequently performed on an updated available channel.

In a possible implementation of any one of the foregoing aspects, the association response frame includes one or more of the following information: second indication information, a presence indication of the second indication information, second station type indication information, second sector indication information, and a second sector presence indication. The second indication information indicates a subchannel on which transmission is allowed and/or a subchannel on which transmission is forbidden in the BSS bandwidth of the second device. The presence indication of the second indication information indicates whether the second indication information is present in the association response frame. The second station type indication information indicates a type of the second device, and the type of the second device is a standard-power access point type. The second sector indication information indicates a sector direction in which transmission is allowed and/or a sector direction in which transmission is forbidden in the BSS bandwidth of the second device. The second sector presence indication indicates whether the second sector indication information is present in the association response frame.

In a possible implementation of any one of the foregoing aspects, the beacon frame further includes one or more of the following information: second sector indication information and a second sector presence indication. The second sector indication information indicates a sector direction in which transmission is allowed and/or a sector direction in which transmission is forbidden in the BSS bandwidth of the second device. The second sector presence indication indicates whether the second sector indication information is present in the beacon frame.

According to a fifth aspect, this application provides a data transmission method. The method includes: A second device generates a PPDU, and sends the PPDU on a first channel. The PPDU is used to schedule a first device to perform uplink data transmission, or the PPDU carries data to be sent to a first device. The first channel is a channel in an intersection set of a subchannel on which transmission is allowed in a BSS bandwidth of the second device or a second bandwidth and a subchannel on which transmission is allowed in a first bandwidth. The first bandwidth is a maximum channel bandwidth supported by the first device or a preset bandwidth, and the second bandwidth is a maximum channel bandwidth supported by the second device or the preset bandwidth. The preset bandwidth may be one of 320 MHz, 160 MHz, 80 MHz, 40 MHz, and 20 MHz. The first device is a station (that is, a second type of device in Table 1: a fixed client) connected to a laws and regulations database. The second device is an access point (that is, a first type of device in Table 1: a standard-power access point controlled through AFC) connected to the laws and regulations database, or another station connected to the laws and regulations database.

This solution provides a method in which the first device (station) notifies the second device that an available channel (or a channel in which transmission is allowed) and an available sector direction (or a sector direction in which transmission is allowed) are updated, so that the second device can learn of a channel use situation (a specific channel occupied by the incumbent user and a specific channel not occupied by the incumbent user) of the first device, to avoid a case in which the second device sends data to the first device or triggers the first device to send data on a channel on which the first device is not allowed to perform transmission and the first device cannot perform confirmation or data sending. In this way, waste of air interface resources can be reduced, and interference to the incumbent user can be reduced.

According to a sixth aspect, this application provides a data transmission method. The method includes: A first device receives a PPDU on a first channel, and parses the PPDU. The PPDU is used to schedule the first device to perform uplink data transmission, or the PPDU carries data to be sent to the first device. The first channel is a channel in an intersection set of a subchannel on which transmission is allowed in a BSS bandwidth of a second device or a second bandwidth and a subchannel on which transmission is allowed in a first bandwidth. The first bandwidth is a maximum channel bandwidth supported by the first device or a preset bandwidth, and the second bandwidth is a maximum channel bandwidth supported by the second device or the preset bandwidth. The preset bandwidth may be one of 320 MHz, 160 MHz, 80 MHz, 40 MHz, and 20 MHz. The first device is a station (that is, a second type of device in Table 1: a fixed client) connected to a laws and regulations database. The second device is an access point (that is, a first type of device in Table 1: a standard-power access point controlled through AFC) connected to the laws and regulations database, or another station connected to the laws and regulations database.

According to a seventh aspect, this application provides a communication apparatus. The communication apparatus may be a second device or a chip, for example, a Wi-Fi chip, in the second device. The communication apparatus includes: a processing unit, configured to generate a PPDU, where the PPDU is used to schedule a first device to perform uplink data transmission, or the PPDU carries data to be sent to a first device; and a transceiver unit, configured to send the PPDU on a first channel, where the first channel is a channel in an intersection set of a subchannel on which transmission is allowed in a BSS bandwidth of the second device or a second bandwidth and a subchannel on which transmission is allowed in a first bandwidth, the first bandwidth is a maximum channel bandwidth supported by the first device or a preset bandwidth, and the second bandwidth is a maximum channel bandwidth supported by the second device or the preset bandwidth. The preset bandwidth may be one of 320 MHz, 160 MHz, 80 MHz, 40 MHz, and 20 MHz. The first device is a station (that is, a second type of device in Table 1: a fixed client) connected to a laws and regulations database. The second device is an access point (that is, a first type of device in Table 1: a standard-power access point controlled through AFC) connected to the laws and regulations database, or another station connected to the laws and regulations database.

According to an eighth aspect, this application provides a communication apparatus. The communication apparatus may be a first device or a chip, for example, a Wi-Fi chip, in the first device. The communication apparatus includes: a transceiver unit, configured to receive a PPDU on a first channel, where the PPDU is used to schedule the first device to perform uplink data transmission, or the PPDU carries data to be sent to the first device, the first channel is a channel in an intersection set of a subchannel on which transmission is allowed in a BSS bandwidth of a second device or a second bandwidth and a subchannel on which transmission is allowed in a first bandwidth, the first bandwidth is a maximum channel bandwidth supported by the first device or a preset bandwidth, and the second bandwidth is a maximum channel bandwidth supported by the second device or the preset bandwidth; and a processing unit, configured to parse the PPDU. The preset bandwidth may be one of 320 MHz, 160 MHz, 80 MHz, 40 MHz, and 20 MHz. The first device is a station (that is, a second type of device in Table 1: a fixed client) connected to a laws and regulations database. The second device is an access point (that is, a first type of device in Table 1: a standard-power access point controlled through AFC) connected to the laws and regulations database, or another station connected to the laws and regulations database.

According to a ninth aspect, this application provides a communication apparatus. The communication apparatus may be a first device or a chip, for example, a Wi-Fi chip, in the first device, and includes a processor and a transceiver.

In a design, the communication apparatus is configured to: send a first request frame, where the first request frame includes first indication information, the first indication information indicates a subchannel on which the first device is allowed to perform transmission and/or a subchannel on which the first device is forbidden to perform transmission in a first bandwidth, the first bandwidth is a maximum channel bandwidth supported by the first device or a preset bandwidth, and the preset bandwidth is one of 320 MHz, 160 MHz, 80 MHz, 40 MHz, and 20 MHz; and receive a first response frame. The first device is a station.

Optionally, the processor is configured to generate the first request frame.

In another design, the processor is configured to generate a PPDU. The PPDU is used to schedule the first device to perform uplink data transmission, or the PPDU carries data to be sent to the first device. The transceiver is configured to send the PPDU on a first channel. The first channel is a channel in an intersection set of a subchannel on which transmission is allowed in a BSS bandwidth of the second device or a second bandwidth and a subchannel on which transmission is allowed in a first bandwidth, the first bandwidth is a maximum channel bandwidth supported by the first device or a preset bandwidth, and the second bandwidth is a maximum channel bandwidth supported by the second device or the preset bandwidth. The preset bandwidth may be one of 320 MHz, 160 MHz, 80 MHz, 40 MHz, and 20 MHz. The first device is a station connected to a laws and regulations database. The second device is an access point connected to the laws and regulations database, or another station connected to the laws and regulations database.

According to a tenth aspect, this application provides a communication apparatus. The communication apparatus may be a second device or a chip, for example, a Wi-Fi chip, in the second device, and includes a processor and a transceiver.

In a design, the communication apparatus is configured to: receive a first request frame, where the first request frame includes first indication information, the first indication information indicates a subchannel on which the first device is allowed to perform transmission and/or a subchannel on which the first device is forbidden to perform transmission in a first bandwidth, the first bandwidth is a maximum channel bandwidth supported by the first device or a preset bandwidth, and the preset bandwidth is one of 320 MHz, 160 MHz, 80 MHz, 40 MHz, and 20 MHz; and send a first response frame. The first device is a station, and the second device is an access point or a station other than the first device.

Optionally, the processor is configured to generate a first response frame.

In another design, the transceiver is configured to receive a PPDU on a first channel. The PPDU is used to schedule the first device to perform uplink data transmission, or the PPDU carries data to be sent to the first device, the first channel is a channel in an intersection set of a subchannel on which transmission is allowed in a BSS bandwidth of a second device or a second bandwidth and a subchannel on which transmission is allowed in a first bandwidth, the first bandwidth is a maximum channel bandwidth supported by the first device or a preset bandwidth, and the second bandwidth is a maximum channel bandwidth supported by the second device or the preset bandwidth. The processor is configured to parse the PPDU. The preset bandwidth may be one of 320 MHz, 160 MHz, 80 MHz, 40 MHz, and 20 MHz. The first device is a station connected to a laws and regulations database. The second device is an access point connected to the laws and regulations database, or another station connected to the laws and regulations database.

According to an eleventh aspect, this application provides an apparatus. The apparatus is implemented in a product form of a chip, including an input/output interface and a processing circuit.

In a design, the apparatus is a chip in a first device in the first aspect. The input/output interface is configured to: output a first request frame for processing through a radio frequency circuit, and send the first request frame through an antenna. The first request frame includes first indication information, the first indication information indicates a subchannel on which the first device is allowed to perform transmission and/or a subchannel on which the first device is forbidden to perform transmission in a first bandwidth, the first bandwidth is a maximum channel bandwidth supported by the first device or a preset bandwidth, and the preset bandwidth is one of 320 MHz, 160 MHz, 80 MHz, 40 MHz, and 20 MHz. The input/output interface is further configured to input a first response frame receive through the antenna and the radio frequency circuit. The first device is a station.

Optionally, the processing circuit is configured to generate the first request frame.

In another design, the apparatus is a chip in a first device in the sixth aspect. The processing circuit is configured to generate a PPDU. The PPDU is used to schedule the first device to perform uplink data transmission, or the PPDU carries data to be sent to the first device. The input/output interface is configured to: output the PPDU for processing through a radio frequency circuit, and send the PPDU on a first channel through an antenna. The first channel is a channel in an intersection set of a subchannel on which transmission is allowed in a BSS bandwidth of a second device or a second bandwidth and a subchannel on which transmission is allowed in a first bandwidth, the first bandwidth is a maximum channel bandwidth supported by the first device or a preset bandwidth, and the second bandwidth is a maximum channel bandwidth supported by the second device or the preset bandwidth. The preset bandwidth may be one of 320 MHz, 160 MHz, 80 MHz, 40 MHz, and 20 MHz. The first device is a station connected to a laws and regulations database. The second device is an access point connected to the laws and regulations database, or another station connected to the laws and regulations database.

According to a twelfth aspect, this application provides an apparatus. The apparatus is implemented in a product form of a chip, including an input/output interface and a processing circuit.

In a design, the apparatus is a chip in a second device in the second aspect. The input/output interface is configured to input a first request frame received through an antenna and a radio frequency circuit. The first request frame includes first indication information, the first indication information indicates a subchannel on which a first device is allowed to perform transmission and/or a subchannel on which the first device is forbidden to perform transmission in a first bandwidth, the first bandwidth is a maximum channel bandwidth supported by the first device or a preset bandwidth, and the preset bandwidth is one of 320 MHz, 160 MHz, 80 MHz, 40 MHz, and 20 MHz. The input/output interface is further configured to: output a first response frame for processing through the radio frequency circuit, and send the first response frame through the antenna. The first device is a station, and the second device is an access point or a station other than the first device.

Optionally, the processing circuit is configured to generate the first response frame.

In another design, the apparatus is a chip in a second device in the fifth aspect. The input/output interface is configured to input a PPDU received on a first channel through an antenna and a radio frequency circuit. The PPDU is used to schedule a first device to perform uplink data transmission, or the PPDU carries data to be sent to a first device, the first channel is a channel in an intersection set of a subchannel on which transmission is allowed in a BSS bandwidth of the second device or a second bandwidth and a subchannel on which transmission is allowed in a first bandwidth, the first bandwidth is a maximum channel bandwidth supported by the first device or a preset bandwidth, and the second bandwidth is a maximum channel bandwidth supported by the second device or the preset bandwidth. The processing circuit is configured to parse the PPDU. The preset bandwidth may be one of 320 MHz, 160 MHz, 80 MHz, 40 MHz, and 20 MHz. The first device is a station connected to a laws and regulations database. The second device is an access point connected to the laws and regulations database, or another station connected to the laws and regulations database.

According to a thirteenth aspect, this application provides a computer-readable storage medium. The computer-readable storage medium stores program instructions, and when the program instructions run on a computer, the computer is enabled to perform the method in any one of the first aspect, the second aspect, the fifth aspect, and the sixth aspect.

According to a fourteenth aspect, this application provides a computer program product including program instructions. When the computer program product runs on a computer, the computer is enabled to perform the method in any one of the first aspect, the second aspect, the fifth aspect, and the sixth aspect.

According to embodiments of this application, an AP or a STA may learn of a subchannel on which another station (a geographical location at which the another station is located) is forbidden to perform transmission or a subchannel on which another station is allowed to perform transmission, to perform data communication on a subchannel on which the two parties are allowed to perform transmission, and reduce interference to an incumbent user.

### BRIEF DESCRIPTION OF DRAWINGS

To describe the technical solutions in embodiments of this application more clearly, the following briefly describes the accompanying drawings required for describing embodiments.
FIG. 1 is a schematic diagram of an architecture of an AFC system according to an embodiment of this application;
FIG. 2 is a schematic diagram of an architecture of a wireless communication system according to an embodiment of this application;
FIG. 3a is a schematic diagram of a structure of an access point according to an embodiment of this application;
FIG. 3b is a schematic diagram of a structure of a station according to an embodiment of this application;
FIG. 4 is a schematic flowchart of a channel indication method according to an embodiment of this application;
FIG. 5 is a schematic flowchart of a channel indication method in an active association process according to an embodiment of this application;
FIG. 6 is a schematic diagram of a frame format of a STA operation element according to an embodiment of this application;
FIG. 7 is a schematic diagram of a sector bitmap indication according to an embodiment of this application;
FIG. 8 is a schematic diagram of a frame format of an EHT operation element according to an embodiment of this application;
FIG. 9 is a schematic flowchart of a channel indication method in a passive association process according to an embodiment of this application;
FIG. 10 is a schematic flowchart of a channel indication method in a D2D pairing process according to an embodiment of this application;
FIG. 11 is another schematic flowchart of a channel indication method according to an embodiment of this application;
FIG. 12 is a schematic diagram of a frame format of an A-control subfield that carries a disabled subchannel bitmap and a sector bitmap according to an embodiment of this application;
FIG. 13 is a schematic flowchart of a data transmission method according to an embodiment of this application;
FIG. 14 is a schematic diagram of a structure of a communication apparatus according to an embodiment of this application; and
FIG. 15 is a schematic diagram of a structure of a communication apparatus 1000 according to an embodiment of this application.

### DESCRIPTION OF EMBODIMENTS

The following clearly and completely describes technical solutions in embodiments of this application with reference to the accompanying drawings in embodiments of this application.

In descriptions of this application, unless otherwise stated, "/" indicates "or", for example, A/B may indicate A or B. "And/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means "two or more". "At least one of the following items (pieces)" or a similar expression thereof indicates any combination of these items, including a single item (piece) or any combination of a plurality of items (pieces). For example, at least one item (piece) of a, b, or c may represent a, b, c, a and b, a and c, b and c, or a, b, and c. Herein, a, b, and c may be singular or plural.

In the descriptions of this application, the words such as "first" and "second" do not limit a quantity or an execution sequence, and the words such as "first" and "second" do not indicate a definite difference.

In this application, the word such as "example" or "for example" is used to represent giving an example, an illustration, or a description. Any embodiment or design scheme described as an "example", "in an example", or "for example" in this application should not be explained as being more preferred or having more advantages than another embodiment or design scheme. Exactly, the word such as an "example", "in an example", or "for example" is intended to present a related concept in a specific manner.

In this application, an element represented in a singular form represents "one or more" rather than "one and only one", unless otherwise specified.

It should be understood that, in each embodiment of this application, "B corresponding to A" indicates that B is associated with A, and B may be determined based on A. However, it should be further understood that determining B based on A does not mean that B is determined based on only A, and B may be further determined based on A and/or other information.

The following briefly describes some related content, terms, or nouns used in this application.

### I. Use of a 6 GHz unlicensed spectrum

Table 1 shows use of the 6 GHz unlicensed spectrum defined by the federal communications commission. Table 1 shows five types of devices, bands (Bands) on which the five types of devices respectively operate (operate), and a maximum EIRP and a maximum EIPR PSD of each of the five types of devices. The first two devices (namely, a standard-power access point and a fixed client) in Table 1 are connected to a laws and regulations database under control of an automated frequency coordination (automated frequency coordination, AFC) system. The laws and regulations database stores user information of an incumbent user such as a geographical location of the incumbent user, a channel used by the incumbent user, or a transmission direction of the incumbent user. Therefore, a device connected to the laws and regulations database by using the AFC system may learn, based on a geographical location of the device, of a specific channel on which an incumbent user exists, where an 802.11 device cannot perform transmission on the channel on which an incumbent user exists; or learn of a specific direction that is of a specific channel and in which an incumbent user exists, where an 802.11 device cannot perform transmission in the direction in which an incumbent user exists, and the 802.11 device can perform transmission only in the direction in which an incumbent user exists, to avoid interference to the incumbent user. Moreover, in addition to the standard-power access point and the fixed client that are connected to the laws and regulations database, there is a client (a third type of device in Table 1, namely, a client connected to the standard-power access point) that is directly associated with the access point connected to the laws and regulations database (namely, a first type of device in Table 1, the standard-power access point). This type of device (namely, the third type of device in Table 1) may obtain a corresponding channel situation based on broadcast information sent by the access point that is connected to the laws and regulations database (namely, the standard-power access point). A fourth type of device (namely, a low-power access device) and a fifth type of device (a client connected to the low-power access device) in Table 1 are used indoors, and an EIRP and a PSD are reduced, to avoid interference to an incumbent user.

**Table 1: Use of a 6 GHz unlicensed spectrum**

| Device type | Operation band | Maximum EIRP | Maximum EIRP PSD |
|---|---|---|---|
| Standard-power access point (controlled through AFC) | U-NII-5 (5.925 GHz-6.425 GHz) | 36 dBm (decibel-milliwatt, decibel-milliwatt) | 23 dBm/MHz |
| | U-NII-7 (6.525 GHz-6.875 GHz) | | |
| | Note: UNII: Unlicensed national information infrastructure | | |
| Fixed client (Fixed Client) (controlled through AFC) | Unlicensed national information infrastructure | 36 dBm | 23 dBm/MHz |
| Client connected to a standard-power access point | | 30 dBm | 17 dBm/MHz |
| Low-power access device (indoors only) | U-NII-5 (5.925 GHz-6.425 GHz) | 30 dBm | 5 dBm/MHz |
| | U-NII-6 (6.425 GHz-6.525 GHz) | | |
| | U-NII-7 (6.525 GHz-6.875 GHz) | | |
| Client connected to a low-power access device | U-NII-8 (6.875 GHz-7.125 GHz) | 24 dBm | -1 dBm/MHz |

### II. Automated frequency coordination (automated frequency coordination, AFC) system

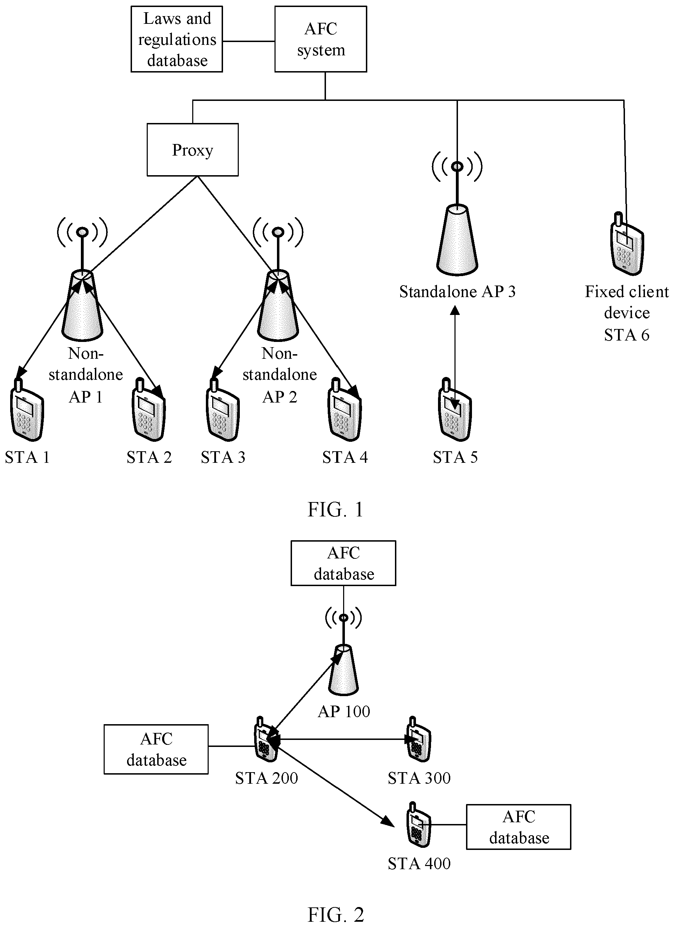

FIG. 1 is a schematic diagram of an architecture of an AFC system according to an embodiment of this application. An 802.11 standard defines two types of devices, and the two devices are respectively an access point (access point, AP) and a non-access point station (non-AP STA). The non-access point station may also be briefly referred to as a station (station, STA). As shown in FIG. 1, an AP 1, an AP 2, and an AP 3 are all a first type of device (namely, the standard-power access point) in Table 1, and a STA 6 is a second type of device (namely, a fixed client) in Table 1. The two types of devices are separately connected to the laws and regulations database by using the AFC system, and may use, based on user information that is of an incumbent user and that is stored in the laws and regulations database, a high EIPR and a high PSD on a channel on which no incumbent user exists. A STA 1, a STA 2, a STA 3, a STA 4, and a STA 5 are all a third type of device (namely, a client connected to the standard-power access point) in Table 1. The STA 1 and the STA2 are associated with the AP 1, the STA 3 and the STA 4 are associated with the AP 2, and the STA 5 is associated with the AP 3. A low EIRP and a low PSD may be used.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and constitutes no limitation on the technical solutions provided in embodiments of this application.

The technical solutions provided in this application may be applied to various communication systems such as a system in which an 802.11 standard is used. For example, the 802.11 standard includes but is not limited to an 802.11be standard or a next generation of the 802.11 standard. A scenario to which the technical solutions of this application are applicable includes data communication between an AP and one or more STAs or data communication between STAs. In embodiments of this application, the term "communication" may be further described as "data transmission", "information transmission", or "transmission".

FIG. 2 is a schematic diagram of an architecture of a wireless communication system according to an embodiment of this application. The wireless communication system includes at least one fixed client (referred to as a STA herein, that is, a second type of device in Table 1) connected to a laws and regulations database, and at least one AP or STA. As shown in FIG. 2, the wireless communication system may include one or more STAs (a STA 200, a STA 300, and a STA 400 in FIG. 2) and/or one or more APs (an AP 100 in FIG. 2). In FIG. 2, the AP 100 is an AP connected to the laws and regulations database, that is, a first type of device in Table 1: a standard-power access point. In addition, in FIG. 2, a STA that communicates with a fixed client connected to the laws and regulations database (for example, the STA 200 in FIG. 2) may be a fixed client (for example, the STA 400 in FIG. 2) connected to the laws and regulations database, or may be a STA (for example, the STA 300 in FIG. 2) not connected to the laws and regulations database. It should be understood that the STA 300 in FIG. 2 may not be associated with any AP, or may be associated with an AP controlled by an AFC system (that is, the first type of device in Table 1: the standard-power access point). For example, the STA 300 may be a client (that is, a third type of device in Table 1) connected to the standard-power access point or a client (that is, a fifth type of device in Table 1) connected to a low-power access device. It should be further understood that an "AFC database" in FIG. 2 may be understood as a laws and regulations database connected by using the AFC system.

Both the AP and the STA in FIG. 2 support a WLAN communication protocol. The communication protocol may include an 802.11be (or referred to as Wi-Fi 7, an EHT protocol), and may further include protocols such as 802.11ax and 802.11ac. Certainly, as a communication technology continuously evolves and develops, the communication protocol may further include a next-generation protocol of 802.11be, and the like. A WLAN is used as an example. An apparatus that implements a method in this application may be an AP or a STA in the WLAN, or a chip or a processing system installed in the AP or the STA.

Optionally, the access point (for example, the AP 100 in FIG. 2) used in this application is an apparatus having a wireless communication function, supports communication performed based on a wireless local area network (wireless local area network, WLAN) protocol, has a function of communicating with another device (such as a station or another access point) in the WLAN network, and certainly, may further have a function of communicating with another device. In a WLAN system, an access point may be referred to as an access point station (access point station, AP STA). The apparatus having the wireless communication function may be an entire device, or may be a chip or a processing system installed in the entire device, or the like. The device in which the chip or the processing system is installed may implement the method and the function in embodiments of this application under control of the chip or the processing system. The AP in this embodiment of this application is an apparatus that provides a service for the STA, and may support an 802.11 series protocol. For example, the AP may be a communication entity such as a communication server, a router, a switch, or a bridge. The AP may include a macro base station, a micro base station, a relay station, or the like in various forms. Certainly, the AP may be a chip and a processing system in the devices in various forms, to implement the method and the function in embodiments of this application.

Optionally, the station (for example, the STA 200, the STA 300, or the STA 400 in FIG. 2) used in this application is an apparatus having a wireless communication function, supports communication performed based on the WLAN protocol, and has a capability of communicating with another station or an access point in the WLAN network. In the WLAN system, the station may be referred to as a non-access point station (non-access point station, non-AP STA). For example, the STA is any user communication device that allows a user to communicate with the AP and further communicate with the WLAN. The apparatus having the wireless communication function may be an entire device, or may be a chip or a processing system installed in the entire device, or the like. The device in which the chip or the processing system is installed may implement the method and the function in embodiments of this application under control of the chip or the processing system. For example, the STA may be user equipment that may be networked, for example, a tablet, a desktop, a laptop, a notebook computer, an ultra-mobile personal computer (Ultra-mobile personal computer, UMPC), a handheld computer, a netbook, a personal digital assistant (personal digital assistant, PDA), or a mobile phone, an internet of things node in the internet of things, a vehicle-mounted communication apparatus in the internet of things, an entertainment device, a game device or system, a global positioning system device, or the like. The STA may alternatively be a chip and a processing system in the foregoing terminals.

The WLAN system may provide high-rate and low-latency transmission. As a WLAN application scenario continuously evolves, the WLAN system is applied to more scenarios or industries, for example, is applied to an internet of things industry, is applied to an internet of things industry or a banking industry, or is applied to an enterprise office, a stadium, an exhibition hall, a concert hall, a hotel room, a dormitory, a ward, a classroom, a supermarket, a square, a street, a generation workshop, or a warehouse. Certainly, a device (for example, an access point or a station) that supports WLAN communication may be a sensor node (for example, a smart water meter, a smart meter, or a smart air detection node) in smart city, a smart device (for example, a smart camera, a projector, a display, a television, a speaker, a refrigerator, or a washing machine) in smart home, a node in the internet of things, an entertainment terminal (for example, a wearable device such as an augmented reality (augmented reality, AR) device or a virtual reality (virtual reality, VR) device), a smart device (for example, a printer, a projector, a loudspeaker, or a speaker) in smart office, an internet of vehicles device in the internet of vehicles, and infrastructure (for example, a vending machine, a self-service navigation station in a supermarket, a self-service cash collection device, or a self-service ordering machine) in a daily life scenario, a large-scale stadium, a music venue, or the like. Specific forms of the STA and the AP are not limited in this embodiment of this application, and are merely described as an example herein.

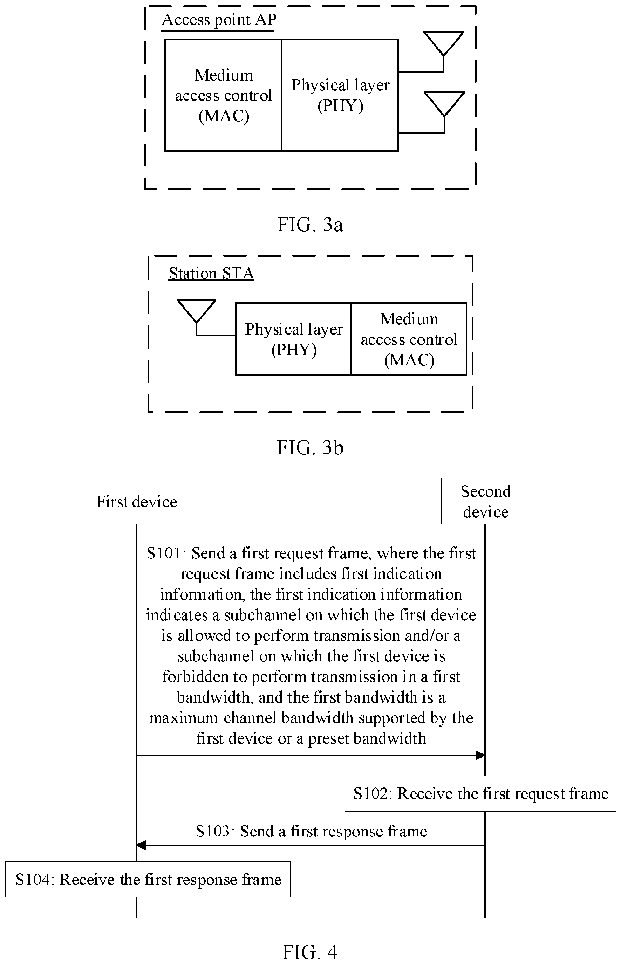

It should be understood that an 802.11 standard focuses on parts of a physical layer (physical layer, PHY) and a medium access control (medium access control, MAC) layer. In an example, FIG. 3a is a schematic diagram of a structure of an access point according to an embodiment of this application. The AP may be a multi-antenna/multi-radio frequency AP, or may be a single-antenna/single-radio frequency AP. An antenna/radio frequency is used to send/receive a data packet (in this specification, the data packet may also be referred to as a physical layer protocol data unit (PHY protocol data unit, PPDU)). In an implementation, an antenna or radio frequency part of the AP may be separated from a main part of the AP, and is in a structure of a remote layout. In FIG. 3a, the AP may include a physical layer processing circuit and a medium access control processing circuit. The physical layer processing circuit may be configured to process a physical layer signal, and the MAC layer processing circuit may be configured to process a MAC layer signal. In another example, FIG. 3b is a schematic diagram of a structure of a station according to an embodiment of this application. FIG. 3b is a schematic diagram of a structure of a single-antenna/single-radio frequency STA. In an actual scenario, the STA may also be a multi-antenna/multi-radio frequency device, or may be a device with at least two antennas. An antenna/radio frequency is used to send/receive a data packet. In an implementation, an antenna or radio frequency part of the STA may be separated from a main part of the STA, and is in a structure of a remote layout. In FIG. 3b, the STA may include a PHY processing circuit and a MAC processing circuit. The physical layer processing circuit may be configured to process a physical layer signal, and the MAC layer processing circuit may be configured to process a MAC layer signal.

The communication device in this embodiment of this application may be a wireless communication device that supports parallel transmission on a plurality of links, for example, referred to as a multi-link device (Multi-link device, MLD) or a multi-band device (multi-band device). Compared with a device that supports only single-link transmission, the multi-link device has higher transmission efficiency and a higher throughput. The multi-link device includes one or more affiliated stations STAs (affiliated STA). The affiliated STA is a logical station, and may operate on a single link. The affiliated station may be an access point (Access Point, AP) or a non-access point station (non-Access Point Station, non-AP STA). A multi-link device whose affiliated station is an AP may be referred to as a multi-link AP, a multi-link AP device, or an AP multi-link device (AP multi-link device); and a multi-link device whose affiliated station is a non-AP STA may be referred to as a multi-link STA, a multi-link STA device, or a STA multi-link device (STA multi-link device).

The foregoing content briefly describes related content and a system architecture in this application. The following describes in detail the technical solutions provided in this application with reference to more accompanying drawings.

An embodiment of this application provides a channel indication method. A request frame (for example, a probe request frame, an association request frame, or a pairing request frame) carries indication information, to indicate a subchannel on which transmission is allowed and/or a subchannel on which transmission is forbidden, so that two communication parties (an AP and a STA or STAs) subsequently perform data communication on a subchannel on which the two parties are allowed to perform transmission, to reduce interference to an incumbent user.

The technical solutions provided in this application are described in a plurality of embodiments. Embodiment 1 describes a manner in which a fixed client (STA) connected to a laws and regulations database indicates, in an association process, a subchannel on which transmission is allowed and/or a subchannel on which transmission is forbidden. Embodiment 2 describes a manner in which a fixed client (STA) connected to a laws and regulations database updates, after an association succeeds, a subchannel on which transmission is allowed and/or a subchannel on which transmission is forbidden. Embodiment 3 describes a manner in which an access point connected to a laws and regulations database and a fixed client (STA) connected to the laws and regulations database perform data communication.

In this application, unless otherwise specified, for same or similar parts in embodiments or implementations, refer to each other. In embodiments of this application and implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application do not constitute a limitation on the protection scope of this application.

Optionally, a first device in this application may be the STA 200 shown in FIG. 2. A second device in this application may be the AP 100 shown in FIG. 2, or a second device in this application may be the STA 300 or the STA 400 shown in FIG. 2. Both the first device and the second device in this application support an 802.11be protocol (or referred to as Wi-Fi 7, an EHT protocol), and may further support another WLAN communication protocol, for example, protocols such as 802.11ax or 802.11ac. It should be understood that the first device and the second device in this application may further support a future 802.11 protocol, for example, Wi-Fi 8 and Wi-Fi 9. That is, the method provided in this application is not only applicable to the 802.11be protocol, but also applicable to the future 802.11 protocol.

The following separately describes embodiments in detail.

### Embodiment 1

Embodiment 1 of this application mainly describes a channel indication method for a fixed client (STA) connected to a laws and regulations database in an association process or a pairing process.

FIG. 4 is a schematic flowchart of a channel indication method according to an embodiment of this application. As shown in FIG. 4, the channel indication method includes but is not limited to the following steps:
S101: A first device sends a first request frame, where the first request frame includes first indication information, the first indication information indicates a subchannel on which the first device is allowed to perform transmission and/or a subchannel on which the first device is forbidden to perform transmission in a first bandwidth, and the first bandwidth is a maximum channel bandwidth supported by the first device or a preset bandwidth.
S102: A second device receives the first request frame.
S103: The second device sends a first response frame.
S104: The first device receives the first response frame.

The first device may be a station (that is, a second type of device in Table 1: a fixed client) connected to a laws and regulations database. The second device may be an access point (that is, a first type of device in Table 1: a standard-power access point controlled through AFC) connected to the laws and regulations database; or the second device is a station other than the first device, for example, a station connected to the standard-power access point in Table 1, a station connected to a low-power access point in Table 1, or a fixed client in Table 1. Certainly, the second device may be a station not associated with any AP.

Optionally, the maximum channel bandwidth supported by the first device may be indicated by using an EHT physical capabilities information field (EHT PHY capabilities information field). For a specific indication manner and a specific meaning, refer to corresponding descriptions in an 802.11be standard. Details are not described herein. The preset bandwidth may be one of 320 MHz, 160 MHz, 80 MHz, 40 MHz, and 20 MHz.

Optionally, the first request frame may be one of a probe request frame, an association request frame, and a pairing request frame. Correspondingly, the first response frame may be one of a probe response frame, an association response frame, and a pairing response frame. Certainly, the first request frame may be another frame. Correspondingly, the first response frame is a frame used to respond to the first request frame. The following describes in detail the channel indication method provided in this embodiment of this application with reference to specific implementations of the first request frame and the first response frame.

### Implementation 1

The first request frame is a probe request frame, and the first response frame is a probe response frame. The channel indication method provided in this embodiment of this application may be applied to an active association process between an AP and a STA. The first device is a station connected to the laws and regulations database, that is, the second type of device in Table 1: the fixed client. The second device is an access point connected to the laws and regulations database, that is, the first type of device in Table 1: the standard-power access point controlled through AFC.

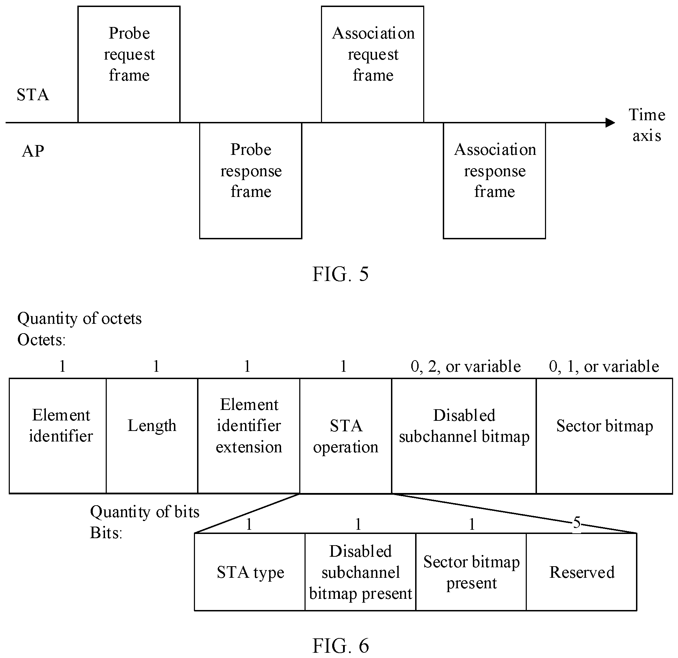

Specifically, FIG. 5 is a schematic flowchart of a channel indication method in an active association process according to an embodiment of this application. As shown in FIG. 5, the STA (that is, the first device) sends a probe request (probe request) frame. The probe request frame is used to request a probe response frame from a specific AP or from a plurality of APs operating on a specific channel (The Probe Request frame is sent by a station to solicit a Probe Response frame from a specific AP or from multiple APs operating in a particular channel). Correspondingly, after receiving the probe request frame, the AP (that is, the second device) sends the probe response (probe response) frame. The probe response frame is sent to a specific station in response to a probe request (The Probe Response frame is sent to a specific station in response to a Probe Request). After receiving the probe response frame, the STA (that is, the first device) sends an association request (association request) frame. Correspondingly, after receiving the association request frame, the AP (that is, the second device) sends an association response (association response) frame, to complete an association. It should be understood that before the station is allowed to send data by using the AP, the station needs to be associated with the AP (Before a station is allowed to send data via an AP it must associate with the AP). The association starts from sending an association request to the AP by the station (Association begins with the station sending an Association Request to the AP). If the station is admitted, the AP responds with an association response (If the station is admitted, the AP responds with an Association Response). By exchanging the association request and the association response, the station and the AP exchange capability information (support for an optional function), and the AP notifies the station of a specific operation parameter in a basic service set (basic service set, BSS) (With the Association Request and Response exchange, the station and AP exchange capability information (support for optional features) and the AP informs the station of specific operating parameters within the BSS).

The probe request frame in FIG. 5 includes first indication information, and the first indication information indicates a subchannel on which the STA (that is, the first device) is allowed to perform transmission and/or a subchannel on which the STA (that is, the first device) is forbidden to perform transmission in a maximum channel bandwidth supported by the STA (that is, the first device), or the first indication information indicates a subchannel on which the STA (that is, the first device) is allowed to perform transmission and/or a subchannel on which the STA (that is, the first device) is forbidden to perform transmission in the preset bandwidth. The preset bandwidth herein is one of 320 MHz, 160 MHz, 80 MHz, 40 MHz, and 20 MHz. In other words, the first indication information indicates a specific channel on which the STA (that is, the first device) is allowed to perform transmission and a specific channel on which the STA (that is, the first device) is forbidden to perform transmission.

In this application, "subchannel on which transmission is allowed" may also be understood as "non-punctured (non-punctured) subchannel", and correspondingly, "subchannel on which transmission is forbidden" may be understood as "punctured (punctured) subchannel". Therefore, the first indication information may also be understood as indicating a non-punctured subchannel and/or a punctured subchannel of the STA (that is, the first device) in the maximum channel bandwidth supported by the STA (that is, the first device), or indicating a non-punctured subchannel and/or a punctured subchannel of the STA (that is, the first device) in the preset bandwidth. In this application, "subchannel on which transmission is allowed" may also be understood as a channel that is not used by an incumbent user near ("near" herein may be understood as "being in a specific range) a geographical location at which the STA (that is, the first device) is located, and "subchannel on which transmission is forbidden" may also be understood as a channel that is used by the incumbent user near ("near" herein may be understood as "being in a specific range) the geographical location at which the STA (that is, the first device) is located.

Optionally, the subchannel (or the punctured subchannel) on which transmission is forbidden and that is indicated by the first indication information is also applicable to the AP (that is, the second device) associated with the STA (that is, the first device). In other words, the subchannel (or the punctured subchannel) on which transmission is forbidden and that is indicated by the first indication information can be used by neither the STA (that is, the first device) nor the AP (that is, the second device) associated with the STA (that is, the first device). In other words, the first indication information may not only indicate a subchannel on which the STAis not allowed to perform transmission in the first bandwidth, but may also indicate (for example, implicitly indicate) that the AP associated with the STA is also forbidden to perform transmission on the subchannel. The first bandwidth is the maximum channel bandwidth supported by the first device or the preset bandwidth.

Optionally, the first indication information may be represented by using a bitmap. A bit in the first indication information indicates whether the STA (that is, the first device) is allowed to perform transmission on a subchannel corresponding to the bit (or whether a subchannel corresponding to the bit is punctured). For example, when a bit in the first indication information is set to 0, it indicates that transmission is allowed on a subchannel corresponding to the bit (or the subchannel corresponding to the bit is non-punctured); or when a bit is set to 1, it indicates that transmission is forbidden on a subchannel corresponding to the bit (or the subchannel corresponding to the bit is punctured). Alternatively, when a bit in the first indication information is set to 1, it indicates that transmission is allowed on a subchannel corresponding to the bit (or the subchannel corresponding to the bit is non-punctured); or when a bit is set to 0, it indicates that transmission is forbidden on a subchannel corresponding to the bit (or the subchannel corresponding to the bit is punctured). In this embodiment of this application, whether that a bit in the first indication information is set to 0 indicates that transmission is allowed or that a bit in the first indication information is set to 1 indicates that transmission is allowed is not limited.

A bandwidth of the subchannel corresponding to a bit in the first indication information may be 20 MHz, 40 MHz, 80 MHz, or the like. A bandwidth granularity of the subchannel corresponding to the bit is not limited in this application. For ease of description, in this application, that a bit corresponds to one 20 MHz subchannel is used as an example. In an implementation, a length of the first indication information may be fixed to 16 bits (that is, 2 octets), and the 16 bits respectively correspond to 16 20 MHz subchannels in ascending order of frequencies, in descending order of frequencies, or in another predetermined sequence in 320 MHz. In this case, the first indication information indicates the subchannel on which the STA (that is, the first device) is allowed to perform transmission and/or the subchannel on which the STA (that is, the first device) is forbidden to perform transmission in the preset bandwidth (that is, 320 MHz). In another implementation, a length of the first indication information is determined based on the maximum channel bandwidth supported by the STA (that is, the first device). For example, if the maximum channel bandwidth supported by the STA (that is, the first device) is 160 MHz, the length of the first indication information is 8 bits (that is, 1 octet), and the 8 bits respectively correspond to eight 20 MHz subchannels in ascending order of frequencies, in descending order of frequencies, or in another predetermined sequence in 160 MHz. For another example, if the maximum channel bandwidth supported by the STA (that is, the first device) is 80 MHz, the length of the first indication information is 4 bits, and the 4 bits respectively correspond to four 20 MHz subchannels in ascending order of frequencies, in descending order of frequencies, or in another predetermined sequence in 80 MHz.

Optionally, the probe request frame may further include one or more of the following information: a presence indication of the first indication information, first station type indication information, first sector indication information, and a first sector presence indication.

The presence indication of the first indication information indicates whether the first indication information is present (in the probe request frame). Optionally, in addition to indicating whether the first indication information is present, the presence indication of the first indication information may further implicitly indicate whether a type of the STA (that is, the first device) is a type of a station connected to an AFC system, that is, the second type of device in Table 1: the fixed client. The presence indication of the first indication information in the probe request frame in this application may be set to a first value (for example, 1), to indicate that the first indication information is present in the probe request frame, and may further implicitly indicate that the type of the STA (that is, the first device) is the type of the station connected to the AFC system. The presence indication of the first indication information is set to a second value (for example, 0), to indicate that the first indication information is not present, which may indicate that transmission is allowed on all subchannels in the first bandwidth (or all subchannels in the first bandwidth are non-punctured); and may further implicitly indicate that the type of the STA (that is, the first device) is not the type of the station connected to the AFC system. Certainly, when all bits in the first indication information are set to 0, it may indicate that transmission is allowed on all subchannels in the first bandwidth (or all subchannels in the first bandwidth are non-punctured).

The first station type indication information may indicate the type of the STA (that is, the first device). In this application, the type of the STA (that is, the first device) is the type of the station connected to the AFC system, that is, the second type of device in Table 1: the fixed client. Optionally, the first station type indication information may further implicitly indicate whether the first indication information is present. For example, if the type that is of the STA (that is, the first device) and that is indicated by the first station type indication information is the station connected to the AFC system, it indicates/implicitly indicates that the first indication information is present. If the type that is of the STA (that is, the first device) and that is indicated by the first station type indication information is a station (that is, a third type of device in Table 1) connected to the standard-power access point or a station (that is, a fifth type of device in Table 1) connected to the low-power access point, it indicates/implicitly indicates that the first indication information is not present. It should be understood that if the first station type indication information implicitly indicates whether the first indication information is present, the probe request frame may not include the presence indication of the first indication information.

The first sector indication information may indicate a sector direction in which the first device is allowed to perform transmission and/or a sector direction in which the first device is forbidden to perform transmission in the first bandwidth. In other words, the first sector indication information indicates a specific sector direction in which the STA (that is, the first device) is allowed to perform transmission and a specific sector direction in which the STA (that is, the first device) is forbidden to perform transmission. In an implementation, the first sector indication information may be represented by using a bitmap. A bit in the first sector indication information indicates whether the STA (that is, the first device) is allowed to perform transmission in a sector direction corresponding to the bit. When a bit in the first sector indication information is set to 0, it indicates that transmission is allowed in a sector direction corresponding to the bit (in the first bandwidth); or when a bit is set to 1, it indicates that transmission is forbidden in the sector direction corresponding to the bit (in the first bandwidth). Alternatively, when a bit in the first sector indication information is set to 1, it indicates that transmission is allowed in a sector direction corresponding to the bit (in the first bandwidth); or when a bit is set to 0, it indicates that transmission is forbidden in the sector direction corresponding to the bit (in the first bandwidth). It is assumed that the first bandwidth is 80 MHz. When a bit in the first sector indication information is set to 1, it indicates that transmission is forbidden in a sector direction corresponding to the bit in the 80 MHz bandwidth; or when a bit is set to 0, it indicates that transmission is allowed in the sector direction corresponding to the bit in the 80 MHz bandwidth. A length of the first sector indication information may have a fixed value, for example, 8 bits, respectively corresponding to eight sector directions preconfigured in directions corresponding to 360 degrees; or 4 bits, respectively corresponding to four sector directions preconfigured in the directions corresponding to 360 degrees. In another implementation, the first sector indication information includes one or more sector identifiers, and the STA (that is, the first device) is allowed or forbidden to perform transmission in sector directions respectively identified by the one or more sector identifiers.

Optionally, the first sector indication information may separately provide an indication for each subchannel in the first bandwidth. In other words, the first sector indication information may indicate a sector direction in which the STA (that is, the first device) is allowed to perform transmission and/or a sector direction in which the STA (that is, the first device) is forbidden to perform transmission on each subchannel in the first bandwidth. It should be understood that when transmission is forbidden in all sector directions of a subchannel, transmission is forbidden on the subchannel (or the subchannel is punctured). In this case, the probe request frame may not need to carry the first indication information, or certainly may carry the first indication information. It should be further understood that quantities of sector directions of all subchannels in the first bandwidth may be the same or may be different. This is not limited in this embodiment of this application.

Optionally, the first sector indication information may separately provide an indication for a subchannel (or a non-punctured subchannel) on which transmission is allowed in the first bandwidth. In other words, the first sector indication information may further indicate a sector direction in which the STA (that is, the first device) is allowed to perform transmission and/or a sector direction in which the STA (that is, the first device) is forbidden to perform transmission on each subchannel (or the non-punctured subchannel) on which transmission is allowed in the first bandwidth.

It may be understood that because some fixed microwave communication is highly directional, transmission cannot be performed in a direction of microwave communication, and transmission may be performed in another direction. Therefore, in this embodiment of this application, the probe request frame carries sector indication information, to indicate a sector direction in which transmission is allowed and/or a sector direction in which transmission is forbidden. When there is an incumbent user in some sector directions of a channel, the channel may still be used in the other sector directions, to improve spectrum efficiency/spectrum utilization.

The first sector presence indication may indicate whether the first sector indication information is present (in the probe request frame). When the first sector presence indication is set to a first value (for example, 1), it indicates that the first sector indication information is present (in the probe request frame). When the first sector presence indication is set to a second value (for example, 0), it indicates that the first sector indication information is not present (in the probe request frame), and it may further indicate that all sector directions are available/transmission is allowed in all sector directions.

Optionally, the foregoing information (that is, one or more of the first indication information, the presence indication of the first indication information, the first station type indication information, the first sector indication information, and the first sector presence indication) may be presented in a form of a field, or may be presented in a form of an information element. For ease of description, in this application, an information element that includes the foregoing information (that is, one or more of the first indication information, the presence indication of the first indication information, the first station type indication information, the first sector indication information, and the first sector presence indication) is referred to as a STA operation element. Certainly, the information element that includes the foregoing information may have another name. This is not limited in this application.

For example, FIG. 6 is a schematic diagram of a frame format of a STA operation element according to an embodiment of this application. As shown in FIG. 6, the STA operation element includes but is not limited to the following fields: an element identifier (element ID) field, a length (length) field, an element identifier extension (element ID extension) field, a STA operation field, a disabled subchannel bitmap field (that is, the first indication information), and a sector bitmap field (that is, the first sector indication information). The STA operation field includes but is not limited to a STA type subfield (that is, the first station type indication information), a disabled subchannel bitmap present subfield (that is, the presence indication of the first indication information), a sector bitmap present subfield (that is, the first sector presence indication), a reserved field, and the like. The STA type subfield indicates a STA type of the STA (that is, a STA that sends the STA type subfield), and may be a fixed client (that is, the second type of device in Table 1) connected to the laws and regulations database, or a client (that is, the fifth type of device in Table 1) connected to the low-power access device, or a client (that is, the third type of device in Table 1) connected to the standard-power access point. Alternatively, the STA type subfield may indicate whether the STA (a STA that sends the STA type subfield) is a fixed client (that is, the second type of device in Table 1) connected to the laws and regulations database. A length of the disabled subchannel bitmap present subfield may be 1 bit, to indicate whether the disabled subchannel bitmap field is present. If it indicates that the disabled subchannel bitmap field is not present, it indicates that all subchannels are available. A length of the disabled subchannel bitmap (disabled subchannel bitmap) field may be 16 bits, respectively corresponding to 16 20 MHz subchannels in ascending order of frequencies in 320 MHz. The disabled subchannel bitmap field indicates a specific subchannel (or a non-punctured subchannel) on which the STA is allowed to perform transmission and a specific subchannel (or a punctured subchannel) on which the STA is forbidden to perform transmission. For example, a bit in the disabled subchannel bitmap field is set to 1, to indicate that the STA is forbidden to perform transmission on a 20 MHz subchannel corresponding to the bit/a 20 MHz subchannel corresponding to the bit is punctured; and a bit in the disabled subchannel bitmap field is set to 0, to indicate that the STA is allowed to perform transmission on a 20 MHz subchannel corresponding to the bit/a 20 MHz subchannel corresponding to the bit is non-punctured. A length of the sector bitmap present subfield is 1 bit, to indicate whether the sector bitmap field is present. If it indicates that the sector bitmap field is not present, it indicates that all sector directions are available. The sector bitmap (sector bitmap) field indicates a specific sector direction in which transmission is allowed and a specific sector direction in which transmission is forbidden.

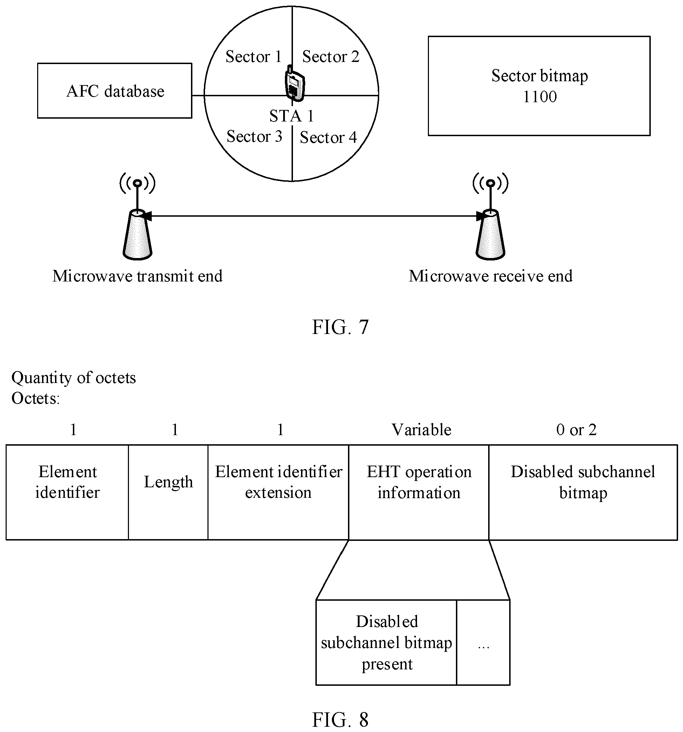

FIG. 7 is a schematic diagram of a sector bitmap indication according to an embodiment of this application. An "AFC database" in FIG. 7 may be understood as a laws and regulations database connected by using the AFC system. As shown in FIG. 7, a STA 1 is a fixed client (that is, the second type of device in Table 1) connected to the laws and regulations database, that is, the first device. There is microwave communication near a geographical location of the STA 1, and a sector direction used for microwave communication is a sector 1 and a sector 2. It is assumed that a length of a sector bitmap is 4 bits, respectively corresponding to four sector directions preconfigured in directions corresponding to 360 degrees, respectively a sector 1 to a sector 4. Because the sector 1 and a sector 2 are used in microwave communication, the STA 1 can use only a sector 3 and the sector 4. In this case, the sector bitmap may be represented as 1100.

It should be understood that names, lengths, and rankings of all fields in FIG. 6 are examples. This is not limited in this embodiment of this application.

Optionally, the probe response frame in FIG. 5 may include one or more of the following information: second indication information, a presence indication of the second indication information, second station type indication information, second sector indication information, and a second sector presence indication.

The second indication information may indicate a subchannel on which transmission is allowed and/or a subchannel on which transmission is forbidden in a BSS bandwidth of the AP (that is, the second device). Alternatively, the second indication information indicates a non-punctured subchannel and/or a punctured subchannel in the BSS bandwidth.

Optionally, the subchannel (or the punctured subchannel) on which transmission is forbidden and that is indicated by the second indication information is also applicable to the STA (that is, the first device) associated with the AP (that is, the second device). In other words, the subchannel (or the punctured subchannel) on which transmission is forbidden and that is indicated by the second indication information can be used by neither the AP (that is, the second device) nor the STA (that is, the first device) associated with the AP (that is, the second device). In other words, the second indication information may not only indicate a subchannel on which transmission is forbidden in the BSS bandwidth of the AP (that is, the second device), but may also indicate (for example, implicitly indicate) that the STA associated with the AP is also forbidden to perform transmission on the subchannel.

The presence indication of the second indication information indicates whether the second indication information is present (in the probe response frame). Optionally, the presence indication of the second indication information may further implicitly indicate whether the type of the AP (that is, the second device) is a standard-power access point type, that is, the first type of device in Table 1: the standard-power access point (controlled through AFC). When the presence indication of the second indication information is set to 1, it indicates that the second indication information is present; and it may further implicitly indicate that the AP (that is, the second device) is a standard-power access point controlled through AFC.

Optionally, the second indication information and the presence indication of the second indication information may be carried in an EHT operation element. The EHT operation element may be located in the probe response frame. The EHT operation element includes a disabled subchannel bitmap present subfield (that is, the presence indication of the second indication information) and a disabled subchannel bitmap field (that is, the second indication information). A length of the disabled subchannel bitmap present subfield may be 1 bit, to indicate whether the disabled subchannel bitmap field is present. When the bit is 1, it indicates that the disabled subchannel bitmap field is present; or when the bit is 0, it indicates that the disabled subchannel bitmap field is not present. If the disabled subchannel bitmap field is present, a length of the disabled subchannel bitmap field may be 2 octets (16 bits), to indicate a specific available subchannel (a subchannel on which transmission is allowed or a non-punctured subchannel) and a specific unavailable subchannel (a subchannel on which transmission is forbidden or a punctured subchannel) in the entire BSS bandwidth. When a bit in a disabled subchannel bitmap is 0, it indicates that a subchannel corresponding to the bit is available (that is, transmission is allowed on the subchannel or the subchannel is non-punctured); or when a bit is 1, it indicates that the subchannel corresponding to the bit is disabled (that is, transmission is forbidden on the subchannel or the subchannel is punctured).

FIG. 8 is a schematic diagram of a frame format of an EHT operation element according to an embodiment of this application. As shown in FIG. 8, the EHT operation element includes but is not limited to the following fields: an element identifier (element ID) field, a length (length) field, an element identifier extension (element ID extension) field, an EHT operation information (EHT operation information) field, and a disabled subchannel bitmap (disabled subchannel bitmap) field (that is, the second indication information). The EHT operation information (EHT operation information) field may include a disabled subchannel bitmap present subfield (that is, the presence indication of the second indication information). If the disabled subchannel bitmap present subfield (in the EHT operation element) is 1, it indicates that the disabled subchannel bitmap field is present and a list of punctured subchannels in the BSS bandwidth is provided; otherwise (that is, the disabled subchannel bitmap present subfield is 0), the disabled subchannel bitmap field is not present (The Disabled Subchannel Bitmap field is present if the Disabled Subchannel Bitmap Present subfield is 1 and provides a list of subchannels that are punctured within the BSS bandwidth; otherwise it is not present). The disabled subchannel bitmap field in the EHT operation element is a 16-bit bitmap, and a lowest bit of the bitmap corresponds to a 20 MHz subchannel located in the BSS bandwidth, and has a lowest frequency in a set of all 20 MHz subchannels in the BSS bandwidth (The Disabled Subchannel Bitmap field is a 16-bit bitmap where the lowest numbered bit corresponds to the 20 MHz subchannel that lies within the BSS bandwidth and that has the lowest frequency of the set of all 20 MHz subchannels within the BSS bandwidth). In other words, the lowest bit of the disabled subchannel bitmap field corresponds to a 20 MHz subchannel with a lowest frequency in the BSS bandwidth. Each consecutive bit in the bitmap corresponds to a next 20 MHz subchannel with a higher frequency (Each successive bit in the bitmap corresponds to the next higher frequency 20 MHz subchannel). In other words, 16 bits from the lowest bit to a highest bit in the disabled subchannel bitmap field respectively correspond to 16 20 MHz subchannels in ascending order of frequencies in a 320 MHz bandwidth. A bit in the bitmap is set to 1, to indicate that a corresponding 20 MHz subchannel is punctured (that is, transmission is forbidden), and the bit is set to 0, to indicate that the corresponding 20 MHz subchannel is non-punctured (that is, transmission is allowed) (A bit in the bitmap is set to 1 to indicate the corresponding 20 MHz subchannel is punctured and set to 0 to indicate the corresponding 20 MHz subchannel is not punctured).

It should be understood that names, lengths, and rankings of all fields in FIG. 8 are examples. This is not limited in this embodiment of this application.

The second station type indication information indicates the type of the AP (that is, the second device). Optionally, the type of the AP is a standard-power access point type, that is, the first type of device in Table 1: the standard-power access point controlled through AFC.

The second sector indication information may indicate a sector direction in which transmission is allowed and/or a sector direction in which transmission is forbidden in the BSS bandwidth of the AP (that is, the second device). In other words, the second sector indication information indicates a specific sector direction in which the AP (that is, the second device) may perform transmission and a specific sector direction in which the AP (that is, the second device) cannot perform transmission. In an implementation, the second sector indication information may be represented by using a bitmap, for example, a sector bitmap (sector bitmap) field. A bit in the second sector indication information indicates whether the AP (that is, the second device) is allowed to perform transmission in a sector direction corresponding to the bit. When a bit in the second sector indication information/sector bitmap (sector bitmap) is set to 0, it indicates that transmission is allowed in a sector direction corresponding to the bit (in the BSS bandwidth); or when a bit is set to 1, it indicates that transmission is forbidden in the sector direction corresponding to the bit (in the BSS bandwidth). Alternatively, when a bit in the second sector indication information/sector bitmap (sector bitmap) is set to 1, it indicates that transmission is allowed in a sector direction corresponding to the bit (in the BSS bandwidth); or when a bit is set to 0, it indicates that transmission is forbidden in the sector direction corresponding to the bit (in the BSS bandwidth). It is assumed that the BSS bandwidth is 320 MHz. When a bit in the second sector indication information is set to 1, it indicates that transmission is forbidden in a sector direction corresponding to the bit in the 320 MHz bandwidth; or when a bit is set to 0, it indicates that transmission is allowed in the sector direction corresponding to the bit in the 320 MHz bandwidth. A length of the second sector indication information may have a fixed value, for example, 8 bits, respectively corresponding to eight sector directions preconfigured in directions corresponding to 360 degrees; or 4 bits, respectively corresponding to four sector directions preconfigured in the directions corresponding to 360 degrees. In another implementation, the second sector indication information includes one or more sector identifiers, and the AP (that is, the second device) is allowed or forbidden to perform transmission in sector directions respectively identified by the one or more sector identifiers.

Optionally, the second sector indication information may separately provide an indication for each subchannel in the BSS bandwidth. In other words, the second sector indication information may indicate a sector direction in which transmission is allowed and/or a sector direction in which transmission is forbidden on each subchannel in the BSS bandwidth. It should be understood that when transmission is forbidden in all sector directions of a subchannel, transmission is forbidden on the subchannel (or the subchannel is punctured). In this case, the probe response frame may not need to carry the second indication information, or certainly may carry the second indication information. It should be further understood that quantities of sector directions of all subchannels in the BSS bandwidth may be the same or may be different. This is not limited in this embodiment of this application.

Optionally, the second sector indication information may separately provide an indication for a subchannel (or a non-punctured subchannel) on which transmission is allowed in the BSS bandwidth. In other words, the second sector indication information may further indicate a sector direction in which transmission is allowed and/or a sector direction in which transmission is forbidden on each subchannel (or the non-punctured subchannel) on which transmission is allowed in the BSS bandwidth.

The second sector presence indication indicates whether the second sector indication information is present in the probe response frame. When the second sector presence indication is set to a first value (for example, 1), it indicates that the second sector indication information is present (in the probe response frame). When the second sector presence indication is set to a second value (for example, 0), it indicates that the second sector indication information is not present (in the probe response frame), and it may further indicate that all sector directions are available/transmission is allowed in all sector directions.

Optionally, one or more of the second station type indication information, the second sector indication information, and the second sector presence indication may be located in the EHT operation element, for example, in the EHT operation information field; or may be located in another information element or field of the probe response frame. This is not limited in this embodiment of this application.

Optionally, the association request frame in FIG. 5 may include one or more of the following information: first indication information, a presence indication of the first indication information, first station type indication information, first sector indication information, and a first sector presence indication. The first indication information may indicate a subchannel on which the STA (that is, the first device) is allowed to perform transmission and/or a subchannel on which the STA (that is, the first device) is forbidden to perform transmission in the first bandwidth. The presence indication of the first indication information is set to a first value, to indicate that the first indication information is present. The first station type indication information may indicate the type of the STA (that is, the first device), and a type of the first device is the type of the station connected to the AFC system. The first sector indication information indicates a sector direction in which the STA (that is, the first device) is allowed to perform transmission and/or a sector direction in which the STA (that is, the first device) is forbidden to perform transmission in the first bandwidth. The first sector presence indication indicates whether the first sector indication information is present. Specifically, for an implementation of the presence indication of the first indication information, the first indication information, the first station type indication information, the first sector indication information, and the first sector presence indication, refer to the foregoing descriptions. Details are not described herein again.

It should be understood that the subchannel on which transmission is forbidden and that is indicated by the disabled subchannel bitmap (that is, the first indication information) carried in the probe request frame may be the same as or different from the subchannel on which transmission is forbidden and that is indicated by the disabled subchannel bitmap carried in the association request frame. If a subchannel on which the STA is forbidden to perform transmission does not change in a period of time starting from a time point at which the STA (that is, the first device) sends the probe request frame to a time point at which the STA (that is, the first device) sends the association request frame, information such as the disabled subchannel bitmap may be carried in only the probe request frame. In other words, the association request frame may not carry the information such as the disabled subchannel bitmap. Therefore, signaling overheads can be reduced. Certainly, the association request frame may alternatively carry the information such as the disabled subchannel bitmap. If a subchannel on which the STA is forbidden to perform transmission changes in a period of time starting from a time point at which the STA (that is, the first device) sends the probe request frame to a time point at which the STA (that is, the first device) sends the association request frame, information such as the disabled subchannel bitmap needs to be carried in both the probe request frame and the association request frame, and a subchannel on which transmission is forbidden or a subchannel on which transmission is allowed that is indicated by the disabled subchannel bitmap carried in the probe request frame is different from a subchannel on which transmission is forbidden or a subchannel on which transmission is allowed that is indicated by the disabled subchannel bitmap carried in the association request frame. Therefore, the AP (that is, the second device) may be notified in a timely manner that the subchannel on which the STA is forbidden to perform transmission changes, so that communication is subsequently performed on an updated available channel.

Optionally, the association response frame in FIG. 5 may include one or more of the following information: second indication information, a presence indication of the second indication information, second station type indication information, second sector indication information, and a second sector presence indication. The second indication information may indicate a subchannel on which transmission is allowed and/or a subchannel on which transmission is forbidden in the BSS bandwidth of the AP (that is, the second device). The presence indication of the second indication information may indicate whether the second indication information is present. The second station type indication information may indicate a type of the AP (that is, the second device). Herein, the type of the AP is a standard-power access point type, that is, the first type of device in Table 1: the standard-power access point controlled through AFC. The second sector indication information may indicate a sector direction in which transmission is allowed and/or a sector direction in which transmission is forbidden in the BSS bandwidth of the AP (that is, the second device). The second sector presence indication may indicate whether the second sector indication information is present in the association response frame. Specifically, for an implementation of the second indication information, the presence indication of the second indication information, the second station type indication information, the second sector indication information, and the second sector presence indication, refer to the foregoing descriptions. Details are not described herein again.

It should be understood that similar to the probe request frame and the association request frame, a subchannel on which transmission is forbidden and that is indicated by a disabled subchannel bitmap (that is, the second indication information) carried in the probe response frame may be the same as or different from a subchannel on which transmission is forbidden and that is indicated by a disabled subchannel bitmap (that is, the second indication information) carried in the association response frame. If a subchannel on which the AP is forbidden to perform transmission does not change in a period of time starting from a time point at which the AP (that is, the second device) sends the probe response frame to a time point at which the AP (that is, the second device) sends the association response frame, information such as the disabled subchannel bitmap may be carried in only the probe response frame. In other words, the association response frame may not carry the information such as the disabled subchannel bitmap. If a subchannel on which the AP (that is, the second device) is forbidden to perform transmission changes in a period of time starting from a time point at which the AP (that is, the second device) sends the probe response frame to a time point at which the AP (that is, the second device) sends the association response frame, information such as the disabled subchannel bitmap needs to be carried in both the probe response frame and the association response frame, and a subchannel on which transmission is forbidden or a subchannel on which transmission is allowed that is indicated by the disabled subchannel bitmap carried in the probe response frame is different from a subchannel on which transmission is forbidden or a subchannel on which transmission is allowed that is indicated by the disabled subchannel bitmap carried in the association response frame.

It should be further understood that, in FIG. 5, channels on which the probe request frame and the association request frame are sent each are a channel (that is, a non-punctured channel) on which the STA (that is, the first device) is allowed to perform transmission in the first bandwidth, and sector directions in which the probe request frame and the association request frame are sent each are a sector direction in which the STA (that is, the first device) is allowed to perform transmission in the first bandwidth. Similarly, in FIG. 5, channels on which the probe request frame and the association request frame are sent each are a channel (that is, a non-punctured channel) on which the AP (that is, the second device) is allowed to perform transmission in the BSS bandwidth of the AP, and sector directions in which the probe request frame and the association request frame are sent each are a sector direction in which the AP (that is, the second device) is allowed to perform transmission in the BSS bandwidth of the AP.

### Implementation 2

The first request frame is an association request frame, and the first response frame is an association response frame. The channel indication method provided in this embodiment of this application may be applied to a passive association process between an AP and a STA. The first device is a station connected to the laws and regulations database, that is, the second type of device in Table 1: the fixed client. The second device is an access point connected to the laws and regulations database, that is, the first type of device in Table 1: the standard-power access point controlled through AFC.

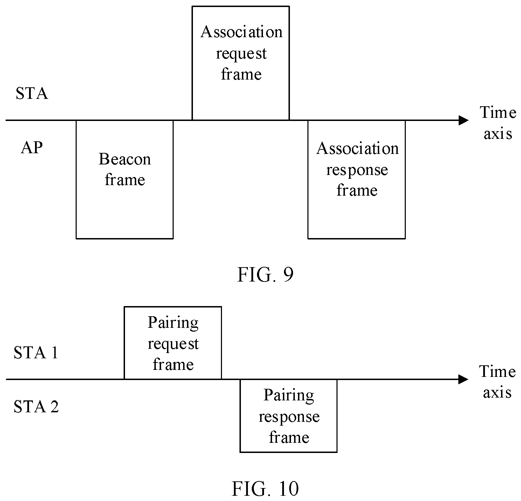

Specifically, FIG. 9 is a schematic flowchart of a channel indication method in a passive association process according to an embodiment of this application. As shown in FIG. 9, the AP (that is, the second device) periodically sends a beacon (beacon) frame. The beacon frame may be used to notify a surrounding or nearby station of existence of the AP, to facilitate a subsequent association between the STA and the AP. After receiving the beacon frame, the STA (that is, the first device) may send an association request (association request) frame. Correspondingly, after receiving the association request frame, the AP (that is, the second device) sends an association response (association response) frame, to complete an association. For a function of the association request frame and the association response frame, refer to the foregoing descriptions. Details are not described herein again.

The beacon frame in FIG. 9 includes an EHT operation element, and the EHT operation element includes a 2-octet disabled subchannel bitmap, and may be used to notify a client (STA) associated with the standard-power access point controlled through AFC, that is, the third type of device in Table 1, of a specific available subchannel (a subchannel on which transmission is allowed or a non-punctured subchannel) and a specific unavailable subchannel (a subchannel on which transmission is forbidden or a punctured subchannel) in the entire basic service set (Basic Service Set, BSS) bandwidth. Optionally, the beacon frame further includes second sector indication information and a second sector presence indication. Specifically, for a specific implementation of the EHT operation element, the second sector indication information, and the second sector indication, refer to corresponding descriptions in Implementation 1. Details are not described herein again.

It may be understood that, because the beacon frame is sent through broadcasting, a STA (for example, the third type of device in Table 1: the client connected to the standard-power access point) around the AP may obtain a specific available subchannel and a specific unavailable subchannel even if the STA is not connected to the laws and regulations database, to reduce interference to the incumbent user. In addition, a fixed client (that is, the second type of device in Table 1) around the AP may also learn of a channel use situation of the AP, to select, with reference to a channel use situation of the fixed client for data transmission, a channel available to both the fixed client and the AP, and reduce interference to the AP and an incumbent user around the fixed client.

The association request frame in FIG. 9 includes the first indication information, and optionally further includes one or more of the following information: a presence indication of the first indication information, first station type indication information, first sector indication information, and a first sector presence indication. For a specific implementation of the first indication information, the presence indication of the first indication information, the first station type indication information, the first sector indication information, and the first sector presence indication, refer to corresponding descriptions in Implementation 1. Details are not described herein again. Alternatively, the association request frame in FIG. 9 may include the STA operation element in FIG. 6. For details about fields in the STA operation element and meanings thereof, refer to the descriptions in FIG. 6. Details are not described herein again.

The association response frame in FIG. 9 may include one or more of the following information: second indication information, a presence indication of the second indication information, second station type indication information, second sector indication information, and a second sector presence indication. For a specific implementation of the second indication information, the presence indication of the second indication information, the second station type indication information, the second sector indication information, and the second sector presence indication, refer to corresponding descriptions in Implementation 1. Details are not described herein again.

It should be understood that, in FIG. 9, a channel on which the association request frame is sent is a channel (that is, a non-punctured channel) on which the STA (that is, the first device) is allowed to perform transmission in the first bandwidth, and a sector direction in which the association request frame is sent is a sector direction in which the STA (that is, the first device) is allowed to perform transmission in the first bandwidth. Similarly, in FIG. 9, a channel on which the beacon frame and the association response frame are sent each are a channel (that is, a non-punctured channel) on which the AP (that is, the second device) is allowed to perform transmission in the BSS bandwidth of the AP, and sector directions in which the beacon frame and the association response frame are sent each are a sector direction in which the AP (that is, the second device) is allowed to perform transmission in the BSS bandwidth of the AP.

It may be learned from Implementation 1 and Implementation 2 that, the station (that is, the second type of device in Table 1: the fixed client) connected to the laws and regulations database declares a station type (indicated by the first station type indication information) of the station based on the probe request frame or the association request frame, so that the AP (that is, the access point connected to the laws and regulations database, that is, the first type of device in Table 1: the standard-power access point controlled through AFC) learns that the STA is a fixed client, and the STA can be limited by a higher ERIP and PSD, and have a larger transmission distance. In addition, because the STA is connected to the laws and regulations database (it indicates that the STA may learn of user information of the incumbent user), and declares, based on the probe request frame or the association request frame, a subchannel (or a punctured subchannel) on which transmission is forbidden at a geographical location of the STA, the AP may learn of the channel use situation (that is, a specific channel occupied by the incumbent user and a specific channel not occupied by the incumbent user) of the fixed client (that is, the STA) more accurately, to select a channel more accurately, and avoid interference to the incumbent user around the fixed client (that is, the STA).

### Implementation 3

The first request frame is a pairing request frame, and the first response frame is a pairing response frame. The channel indication method provided in this embodiment of this application may be applied to a device-to-device (device-to-device, D2D) pairing process. The first device is a station connected to the laws and regulations database, that is, the second type of device in Table 1: the fixed client. The second device is a station other than the first device, for example, a station connected to the standard-power access point, that is, a third type of device in Table 1; or a station connected to the laws and regulations database, that is, the second type of device in Table 1: the fixed client; or a station connected to the low-power access point, that is, a fifth type of device in Table 1.

Specifically, FIG. 10 is a schematic flowchart of a channel indication method in a D2D pairing process according to an embodiment of this application. As shown in FIG. 10, a STA 1 (that is, the first device) sends a pairing request frame. After receiving the pairing request frame, a STA 2 (that is, the second device) sends a pairing response frame, to complete pairing.

The pairing request frame in FIG. 10 includes first indication information, and optionally, further includes one or more of the following information: a presence indication of the first indication information, first station type indication information, first sector indication information, and a first sector presence indication. Specifically, for a specific implementation of the first indication information, the presence indication of the first indication information, the first station type indication information, the first sector indication information, and the first sector presence indication, refer to corresponding descriptions in Implementation 1. Details are not described herein again. Alternatively, the pairing request frame in FIG. 10 may include the STA operation element in FIG. 6. For details about fields in the STA operation element and meanings thereof, refer to the descriptions in FIG. 6. Details are not described herein again.

The pairing response frame in FIG. 10 may include one or more of the following information: second indication information, a presence indication of the second indication information, second station type indication information, second sector indication information, and a second sector presence indication. The second station type indication information in the pairing response frame indicates a type of the STA 2 (that is, the second device). The type of the STA 2 (that is, the second device) is one of a type of a station connected to the standard-power access point, a type of a station connected to an AFC system, and a type of a station connected to the low-power access point. When the STA 2 (that is, the second device) is a station (that is, a third type of device in Table 1) connected to the standard-power access point or a station (that is, a fifth type of device in Table 1) connected to the low-power access point, the pairing response frame may not include the second indication information (that is, a disabled subchannel bitmap) or the second sector indication information (that is, a sector bitmap). Certainly, in this case, the pairing response frame may also include the second indication information (that is, the disabled subchannel bitmap) and/or the second sector indication information (that is, the sector bitmap), the second indication information (that is, the disabled subchannel bitmap) may indicate that transmission is allowed on all subchannels (or all subchannels are non-punctured), and the second sector indication information (that is, the sector bitmap) may indicate that transmission is allowed on all sector directions, because the station (that is, the third type of device in Table 1) connected to the standard-power access point and the station (that is, the fifth type of device in Table 1) connected to the low-power access point are not directly connected to the laws and regulations database, and cannot learn of information about incumbent users at respective geographical locations. Therefore, the station connected to the standard-power access point and the station connected to the low-power access point are prevented from causing interference to the incumbent user by reducing an EIRP and a PSD. When the STA 2 (that is, the second device) is a station (that is, the second type of device in Table 1: the fixed client) connected to the AFC system, the pairing response frame may include the second indication information (that is, the disabled subchannel bitmap) and/or the second sector indication information (that is, the sector bitmap). If the pairing response frame in FIG. 10 includes the second indication information and/or the second sector indication information, the second indication information may indicate a subchannel on which transmission is allowed and/or a subchannel on which transmission is forbidden in the second bandwidth, and the second sector indication information may indicate a sector direction in which transmission is allowed and/or a sector direction in which transmission is forbidden in the second bandwidth. The second bandwidth may be a maximum channel bandwidth supported by the STA 2 (that is, the second device) or the preset bandwidth. The preset bandwidth is one of 320 MHz, 160 MHz, 80 MHz, 40 MHz, and 20 MHz.

The presence indication of the second indication information may indicate whether the second indication information is present (in the pairing response frame), and the second sector presence indication may indicate whether the second sector indication information is present (in the pairing response frame). Optionally, one or more of the second indication information, the presence indication of the second indication information, the second station type indication information, the second sector indication information, and the second sector presence indication may be carried in the STA operation element shown in FIG. 6. For details, refer to corresponding descriptions in FIG. 6. Details are not described herein again.

It should be understood that, in FIG. 10, a channel on which the pairing request frame is sent is a channel (that is, a non-punctured channel) on which the STA 1 (that is, the first device) is allowed to perform transmission in the first bandwidth, and a sector direction in which the pairing request frame is sent is a sector direction in which the STA 1 (that is, the first device) is allowed to perform transmission in the first bandwidth. Similarly, in FIG. 10, a channel of the pairing response frame is a channel (that is, a non-punctured channel) on which the STA 2 (that is, the second device) is allowed to perform transmission in the maximum channel bandwidth supported by the STA 2 or the preset bandwidth, and a sector direction in which the pairing response frame is sent is a sector direction in which the STA2 (that is, the second device) is allowed to perform transmission in the maximum channel bandwidth supported by the STA 2 or the preset bandwidth.

In this embodiment of this application, the fixed client (the STA, the first device) connected to the laws and regulations database uses the probe request frame, the association request frame, or the pairing request frame to carry a channel use situation (whether transmission is allowed on a channel or whether a channel is occupied by the incumbent user) of the fixed client in an association process or a pairing process, to notify the AP or another station, so that data communication is subsequently performed on a channel on which transmission is allowed. In addition, in this embodiment of this application, the probe response frame, the association response frame, or the pairing response frame further carries a channel use situation (whether transmission is allowed on a channel or whether a channel is occupied by the incumbent user) of a peer end (that is, the AP or another station), so that two communication parties learn of an available channel of each other, to perform transmission on a channel available to two parties, and further reduce interference to the incumbent user. A reason is that the fixed client (the STA) connected to the laws and regulations database can learn of a specific channel unavailable to the fixed client, but an AP or a STA that communicates with the fixed client does not learn of the channel unavailable to the fixed client. Consequently, interference may be caused to the incumbent user. For example, it is assumed that a channel available to the AP is a channel 1, but the channel 1 is unavailable to the STA. If the AP sends information to the STA on the channel 1, interference is caused to an incumbent user near the STA. In addition, in this embodiment of this application, sector directions in which two communication parties are respectively allowed to perform transmission are further exchanged in an association process or a pairing process, so that a device can still use the channel in another sector direction when there is an incumbent user in some sector directions, to improve spectrum efficiency.

### Embodiment 2

Embodiment 2 of this application mainly describes how a STA (that is, a first device) updates information if a channel on which the STA (that is, the first device) is forbidden to perform transmission and a channel on which the STA (that is, the first device) is allowed to perform transmission change, and/or a sector direction in which the STA (that is, the first device) is forbidden to perform transmission and a sector direction in which the STA (that is, the first device) is allowed to perform transmission change, after an association succeeds or pairing succeeds.

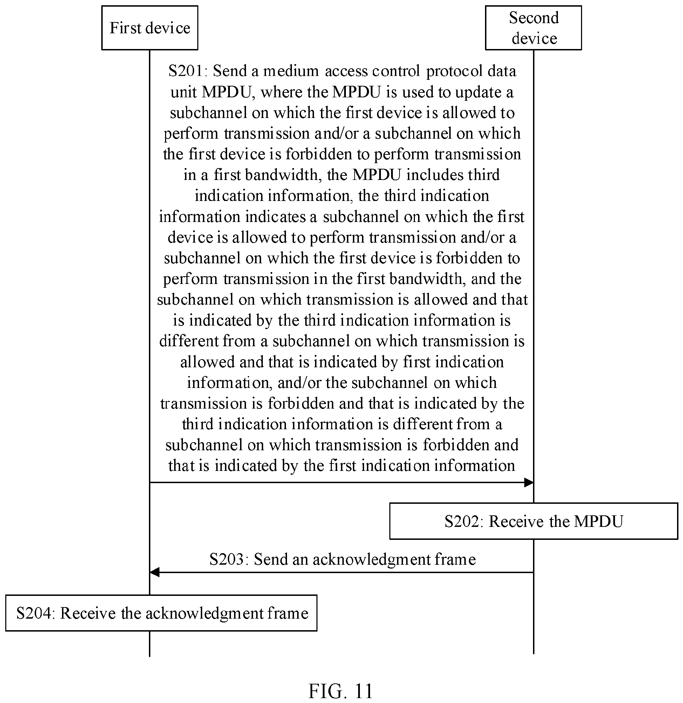

FIG. 11 is another schematic flowchart of a channel indication method according to an embodiment of this application. This embodiment of this application may be implemented together with the foregoing embodiments. As shown in FIG. 11, the channel indication method includes but is not limited to the following steps:
S201: A first device sends a medium access control protocol data unit MPDU, where the MPDU is used to update a subchannel on which the first device is allowed to perform transmission and/or a subchannel on which the first device is forbidden to perform transmission in a first bandwidth, the MPDU includes third indication information, the third indication information indicates a subchannel on which the first device is allowed to perform transmission and/or a subchannel on which the first device is forbidden to perform transmission in the first bandwidth, and the subchannel on which transmission is allowed and that is indicated by the third indication information is different from the subchannel on which transmission is allowed and that is indicated by the first indication information, and/or the subchannel on which transmission is forbidden and that is indicated by the third indication information is different from the subchannel on which transmission is forbidden and that is indicated by the first indication information.
S202: A second device receives the MPDU.
S203: The second device sends an acknowledgment frame.
S204: The first device receives the acknowledgment frame.

The first device may be a station (that is, a second type of device in Table 1: a fixed client) connected to a laws and regulations database. The second device may be an access point (that is, a first type of device in Table 1: a standard-power access point controlled through AFC) connected to the laws and regulations database; or the second device is a station other than the first device, for example, a station connected to the standard-power access point in Table 1, a station connected to a low-power access point in Table 1, or a fixed client in Table 1. Certainly, the second device may be a station not associated with any AP.

Optionally, the first indication information may be carried in a first request frame in Embodiment 1. After an association or pairing in Embodiment 1 succeeds, if a channel on which the first device is forbidden to perform transmission and a channel on which the first device is allowed to perform transmission change, and/or a sector direction in which the first device is forbidden to perform transmission and a sector direction in which the first device is allowed to perform transmission change, the first device sends the medium access control protocol data unit (MAC protocol data unit, MPDU). The MPDU is used to update the subchannel on which the first device is allowed to perform transmission and/or the subchannel on which the first device is forbidden to perform transmission in the first bandwidth. Correspondingly, the second device receives the MPDU. The second device sends the acknowledgment frame after receiving the MPDU, to acknowledge that a corresponding information change is received. Correspondingly, the first device receives the acknowledgment frame. A reason of the change may be that information in the laws and regulations database changes, for example, one or more of a change in a registration situation of an incumbent user; powering on/off of the incumbent user, and a case in which the incumbent user performs registration at different time points; or may be that a radar signal is found on some channels, interference on some channels is large, or the like. The first bandwidth is a maximum channel bandwidth supported by the first device or a preset bandwidth. The maximum channel bandwidth supported by the first device may be indicated by using a PHY capabilities information field, and the preset bandwidth may be one of 320 MHz, 160 MHz, 80 MHz, 40 MHz, and 20 MHz.

The MPDU may include third indication information, the third indication information may be an (updated) disabled subchannel bitmap, and the third indication information may indicate an (updated) subchannel (or a non-punctured subchannel) on which the first device is allowed to perform transmission and/or an (updated) subchannel (or a punctured subchannel) on which the first device is forbidden to perform transmission in the first bandwidth. The subchannel (or the non-punctured subchannel) on which transmission is allowed and that is indicated by the third indication information is different (partially different or completely different herein) from the subchannel (or the non-punctured subchannel) on which transmission is allowed and that is indicated by the first indication information (or a previously received disabled subchannel bitmap), and/or the subchannel (or the punctured subchannel) on which transmission is forbidden and that is indicated by the third indication information is different (partially different or completely different) from the subchannel (or the punctured subchannel) on which transmission is forbidden and that is indicated by the first indication information (or the previously received disabled subchannel bitmap). That is, a currently indicated subchannel on which transmission is allowed is different from a previously indicated subchannel on which transmission is allowed, and/or a currently indicated subchannel on which transmission is forbidden is different from a previously indicated subchannel on which transmission is forbidden.

Optionally, the MPDU may be further used to update a sector direction in which the first device is allowed to perform transmission and/or a sector direction in which the first device is forbidden to perform transmission in the first bandwidth. Therefore, the MPDU may further include third sector indication information, the third sector indication information may be an (updated) sector bitmap, and the third sector indication information may indicate an (updated) sector direction in which the first device is allowed to perform transmission and/or an (updated) sector direction in which the first device is forbidden to perform transmission in the first bandwidth. The sector direction in which transmission is allowed and that is indicated by the third sector indication information is different from a sector direction in which transmission is allowed and that is indicated by first sector indication information (or a previously received sector bitmap), and/or the sector direction in which transmission is forbidden and that is indicated by the third sector indication information is different from a sector direction in which transmission is forbidden and that is indicated by the first sector indication information (or a previously received sector bitmap). That is, a currently indicated sector direction in which transmission is allowed is different from a previously indicated sector direction in which transmission is allowed, and/or a currently indicated sector direction in which transmission is forbidden is different from a previously indicated sector direction in which transmission is forbidden. The first sector indication information may be carried in a first request frame in Embodiment 1.

Optionally, the MPDU may further carry an update/change reason of a subchannel on which transmission is forbidden, and indicate the update/change reason. For example, the MPDU further includes a reason code (reason code) field, and the reason code field may indicate a reason why the first device updates the subchannel on which transmission is allowed and/or the subchannel on which transmission is forbidden in the first bandwidth. After receiving the reason indicated by the reason code field of the MPDU, the second device may select, based on the reason, whether to change a channel on which the second device is allowed to perform transmission and/or a sector direction in which the second device is allowed to perform transmission. For example, if a subchannel on which the first device is forbidden to perform transmission and/or a sector direction in which the first device is forbidden to perform transmission change/changes because the information in the laws and regulations database changes (a radar signal is found or the incumbent user changes), the subchannel on which the second device is forbidden to perform transmission and/or the sector direction in which the second device is forbidden to perform transmission may also change correspondingly. In other words, the second device may also update the subchannel on which the second device is forbidden to perform transmission and/or the sector direction in which the second device is forbidden to perform transmission. Optionally, if the second device is an AP (that is, the first type of device in Table 1) connected to the laws and regulations database, the second device may update, based on a periodically sent beacon frame, the subchannel on which the second device is forbidden to perform transmission and/or the sector direction in which the second device is forbidden to perform transmission. The beacon frame may include an updated EHT operation element, to be specific, includes an updated subchannel on which transmission is forbidden and/or an updated sector direction in which transmission is forbidden. If the second device is a station (that is, the second type of device in Table 1) connected to the laws and regulations database, the second device may also update, by sending one MPDU, the subchannel on which the second device is forbidden to perform transmission and/or the sector direction in which the second device is forbidden to perform transmission. If the second device is a station (that is, a third type of device in Table 1) connected to the standard-power access point or a station (that is, a fifth type of device in Table 1) connected to the low-power access point, updating does not need to be performed.

However, if the subchannel on which the first device is forbidden to perform transmission and/or the sector direction in which the first device is forbidden to perform transmission change/changes because interference of another device to the first device is large on a channel/a sector direction, the subchannel on which the second device is forbidden to perform transmission and/or the sector direction in which the second device is forbidden to perform transmission may not change. Certainly, for simplicity of an implementation, the subchannel on which the second device is forbidden to perform transmission and/or the sector direction in which the second device is forbidden to perform transmission may always change correspondingly, or never change correspondingly.

It should be understood that a channel on which the first device sends the MPDU is an updated channel (that is, a non-punctured channel) on which transmission is allowed in the first bandwidth, and a sector direction in which the MPDU is sent is also an updated sector direction in which transmission is allowed in the first bandwidth.

Optionally, the MPDU may further include a presence indication of the third indication information (for example, a disabled subchannel bitmap present subfield) and/or a third sector presence indication (a sector bitmap present subfield). The presence indication of the third indication information may indicate whether the third indication information is present in the MPDU. If the MPDU includes the presence indication of the third indication information, the presence indication is set to a first value (for example, 1), to indicate that the third indication information is present. The third sector presence indication may indicate whether the third sector indication information is present in the MPDU.

Optionally, the MPDU may include an action frame (Action frame), and the third indication information may be carried in one field or one information element of the action frame, for example, carried in a STA operation element of the action frame. One or more of the third sector indication information, the presence indication of the third indication information, the third sector presence indication, and the reason code field may also be carried in the STA operation element. For example, as shown in FIG. 6, 2 bits in a 5-bit reserved field of the STA operation element shown in FIG. 6 may be used as a reason code field.

Optionally, the third indication information may be carried in an aggregated control (aggregated control, A-control) subfield of the MPDU in addition to an operation element of the action frame, because a transmit end may transmit some control information in a high throughput control field of the MPDU. An A-control subfield in a high-efficiency variant (currently including three forms: a high throughput variant, a very high throughput variant, and a high-efficiency variant) of the high throughput control field carries one to N pieces of control information in a structure of one or more control identifiers and control information. One or more of the third sector indication information, the presence indication of the third indication information, the third sector presence indication, and the reason code field may also be carried in the A-control subfield.

In this embodiment of this application, the A-control field of the MPDU carries the updated subchannel on which transmission is forbidden and/or the updated sector bitmap, and may be transferred to the second device together with information such as data, to quickly transfer a changed available channel, and avoid interference to the incumbent user.

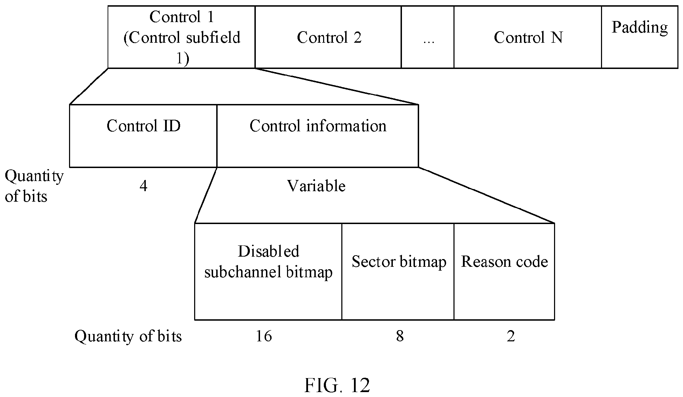

For example, FIG. 12 is a schematic diagram of a frame format of an A-control subfield that carries a disabled subchannel bitmap and a sector bitmap according to an embodiment of this application. As shown in FIG. 12, the A-control subfield includes 1 to N control subfields, and each control subfield includes a control identifier (control ID) and control information (control information). The control identifier indicates a type of the control information. Control information of a control subfield 1 may include but is not limited to the following subfields: a disabled subchannel bitmap subfield (that is, the third indication information), a sector bitmap (that is, the third sector indication information) subfield, a reason code (reason code) field, and the like. A length of the disabled subchannel bitmap subfield may be 16 bits, respectively corresponding to 16 20 MHz subchannels in ascending order of frequencies, in descending order of frequencies, or in another predetermined sequence in 320 MHz. When a bit in the disabled subchannel bitmap subfield is set to 1, it indicates that transmission is forbidden on a 20 MHz subchannel corresponding to the bit (or a 20 MHz subchannel corresponding to the bit is punctured); or when a bit in the disabled subchannel bitmap subfield is set to 0, it indicates that transmission is allowed on a 20 MHz subchannel corresponding to the bit (or a 20 MHz subchannel corresponding to the bit is non-punctured). The sector bitmap subfield is similar to the disabled subchannel bitmap subfield. A length of the sector bitmap subfield may be 8 bits, respectively corresponding to eight sector directions preconfigured in directions corresponding to 360 degrees. When a bit in the sector bitmap subfield is set to 1, it indicates that transmission is forbidden in a sector direction corresponding to the bit; or when a bit in the sector bitmap subfield is set to 0, it indicates that transmission is allowed in a sector direction corresponding to the bit. A length of the reason code field may be 2 bits, to indicate a reason why a subchannel on which transmission is forbidden and/or a sector direction in which transmission is forbidden change/changes.

Optionally, the control information of the control subfield 1 may further include a disabled subchannel bitmap present subfield (that is, the presence indication of the third indication information, which is set to 1) and/or a sector bitmap present subfield (the third sector presence indication), which are/is not shown in FIG. 12.

It should be understood that names, lengths, and rankings of all fields in FIG. 12 are examples. This is not limited in this embodiment of this application.

This embodiment of this application provides a method in which the first device (station) notifies the second device that an available channel (or a channel in which transmission is allowed) and an available sector direction (or a sector direction in which transmission is allowed) are updated, so that the second device can learn of a channel use situation (a specific channel occupied by the incumbent user and a specific channel not occupied by the incumbent user) of the first device, to avoid a case in which when an available channel changes, the second device sends data to the first device or triggers the first device to send data on a channel on which the first device is not allowed to perform transmission and the first device cannot perform confirmation or data sending. In this way, waste of air interface resources can be reduced, and interference to the incumbent user can be reduced.

### Embodiment 3

Embodiment 3 of this application describes a manner in which an access point connected to a laws and regulations database and a fixed client (STA) connected to the laws and regulations database perform data communication.

Optionally, Embodiment 3 of this application may be implemented when each of two communication parties learns of a subchannel on which the other party is allowed to perform transmission. Each of the two communication parties may learn, in the method provided in Embodiment 1 and/or the method provided Embodiment 2, of the subchannel on which the other party is allowed to perform transmission, or certainly may learn, in another manner (which is not limited to the method provided in Embodiment 1 and the method provided Embodiment 2 of this application), of the subchannel on which the other party is allowed to perform transmission. In other words, Embodiment 3 of this application may be implemented together with Embodiment 1 and/or Embodiment 2. For example, Embodiment 3 of this application may be implemented after Embodiment 1 and/or implemented after Embodiment 2. Embodiment 3 of this application may alternatively be separately implemented.

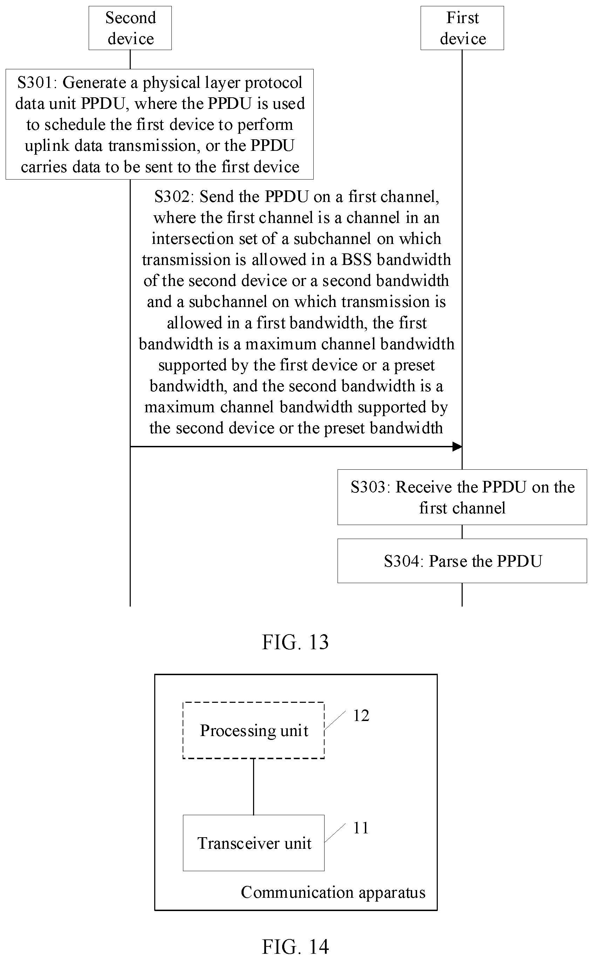

FIG. 13 is a schematic flowchart of a data transmission method according to an embodiment of this application. As shown in FIG. 13, the data transmission method includes but is not limited to the following steps:
S301: A second device generates a physical layer protocol data unit PPDU, where the PPDU is used to schedule a first device to perform uplink data transmission, or the PPDU carries data to be sent to a first device.
S302: The second device sends the PPDU on a first channel, where the first channel is a channel in an intersection set of a subchannel on which transmission is allowed in a BSS bandwidth of the second device or a second bandwidth and a subchannel on which transmission is allowed in a first bandwidth, the first bandwidth is a maximum channel bandwidth supported by the first device or a preset bandwidth, and the second bandwidth is a maximum channel bandwidth supported by the second device or the preset bandwidth.
S303: The first device receives the PPDU on the first channel.
S304: The first device parses the PPDU.

The first device is a station (that is, a second type of device in Table 1: a fixed client) connected to a laws and regulations database. The second device is an access point (that is, a first type of device in Table 1: a standard-power access point controlled through AFC) connected to the laws and regulations database, or another station connected to the laws and regulations database.

Optionally, the second device generates and sends the PPDU on the first channel, and correspondingly, the second device receives and parses the PPDU on the first channel. If the second device is an access point connected to the laws and regulations database (that is, the first type of device in Table 1: the standard-power access point controlled through AFC), the first channel is a channel in the intersection set of the subchannel on which transmission is allowed in the BSS bandwidth of the second device and the subchannel on which transmission is allowed in the first bandwidth. The PPDU is used to schedule the first device to perform uplink data transmission, or the PPDU carries downlink data to be sent to the first device. If the second device is another station connected to the laws and regulations database, the first channel is a channel in the intersection set of the subchannel on which transmission is allowed in the second bandwidth and the subchannel on which transmission is allowed in the first bandwidth. The PPDU carries the data to be sent to the first device. The first bandwidth is the maximum channel bandwidth supported by the first device or the preset bandwidth, and the second bandwidth is a maximum channel bandwidth supported by the second device or the preset bandwidth. The preset bandwidth may be one of 320 MHz, 160 MHz, 80 MHz, 40 MHz, and 20 MHz.

Optionally, the subchannel on which transmission is allowed in the first bandwidth may be obtained in the channel indication method provided in Embodiment 1 or Embodiment 2, or certainly may be obtained in another manner. This is not limited in this embodiment of this application.

In this embodiment of this application, when the second device and the first device perform data communication, channel use situations (a specific channel occupied by an incumbent user and a specific channel not occupied by the incumbent user) of two communication parties are both considered, and data transmission is allowed only on a channel on which the two parties are allowed to perform transmission (two communication parties indicate that transmission is allowed on a channel, that is, 0), to reduce impact on the incumbent user.

In an optional embodiment, there are two implementations of a channel on which transmission is allowed in the BSS bandwidth of the AP (that is, the second device) and transmission is forbidden in the first bandwidth. In a first implementation, the AP may communicate, based on an orthogonal frequency division multiple access (orthogonal frequency division multiple access, OFDMA) technology, with another STA that can perform transmission on the channel, for example, a client (that is, a third type of device in Table 1) connected to a standard power access device controlled through AFC, or another fixed client that indicates that transmission is allowed on the channel and that is connected to the laws and regulations database. In this way, use of a channel can be maximized, to improve a throughput. In another implementation, the AP (that is, the second device) does not perform transmission on a channel on which the STA (that is, the first device) is forbidden to perform transmission. In this way, the incumbent user is not affected to a maximum extent.

For a channel on which transmission is forbidden in the BSS bandwidth of the AP (that is, the second device) and transmission is allowed in the first bandwidth, the first device may perform D2D transmission with another STA on the channel. In this way, use of a channel can be maximized, to improve a throughput. Certainly, the first device may alternatively not perform transmission on the channel on which the AP (that is, the second device) is forbidden to perform transmission. In this way, the incumbent user is not affected to a maximum extent.

The foregoing content describes in detail the method provided in this application. To help implement the solutions in embodiments of this application, embodiments of this application further provide a corresponding apparatus or device.

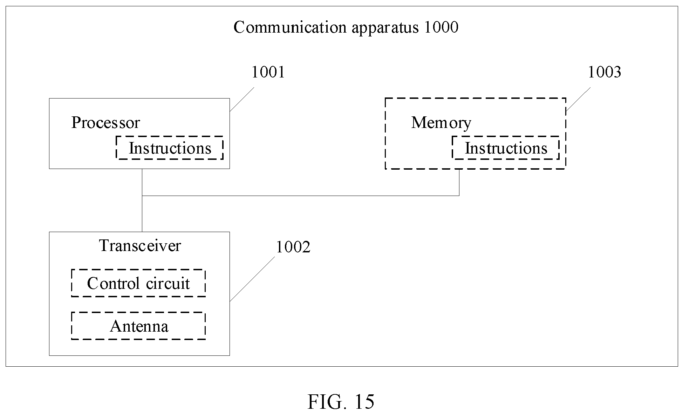

In embodiments of this application, the first device and the second device may be divided into functional modules based on the method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. The following describes in detail a communication apparatus in embodiments of this application with reference to FIG. 14 and FIG. 15. The communication apparatus is a first device or a second device. Further, the communication apparatus may be an apparatus in the first device; or the communication apparatus is an apparatus in the second device.

When an integrated unit is used, FIG. 14 is a schematic diagram of a structure of a communication apparatus according to an embodiment of this application. As shown in FIG. 14, the communication apparatus includes a transceiver unit 11, and optionally, further includes a processing unit 12.

In a design, the communication apparatus may be a first device or a chip in the first device, for example, a Wi-Fi chip. The transceiver unit 11 is configured to send a first request frame. The first request frame includes first indication information, the first indication information indicates a subchannel on which the first device is allowed to perform transmission and/or a subchannel on which the first device is forbidden to perform transmission in a first bandwidth, the first bandwidth is a maximum channel bandwidth supported by the first device or a preset bandwidth, and the preset bandwidth is one of 320 MHz, 160 MHz, 80 MHz, 40 MHz, and 20 MHz. The transceiver unit 11 is further configured to receive a first response frame. The first device is a station.

Optionally, the processing unit 12 is configured to generate the first request frame.

Optionally, the first request frame is a probe request frame, and the first response frame is a probe response frame. The transceiver unit 11 is further configured to: send an association request frame; and receive an association response frame.

Optionally, the processing unit 12 is further configured to generate the association request frame.

Optionally, the first request frame is an association request frame, and the first response frame is an association response frame. The transceiver unit 11 is further configured to receive a beacon frame. The beacon frame includes an EHT operation element, the EHT operation element includes a disabled subchannel bitmap, the disabled subchannel bitmap indicates a subchannel on which transmission is allowed and a subchannel on which transmission is forbidden in a basic service set BSS bandwidth of a second device, and the second device is an access point.

Optionally, the first request frame is a pairing request frame, and the first response frame is a pairing response frame.

Optionally, the first indication information is a bitmap, and a bit in the first indication information indicates whether the first device is allowed to perform transmission in a subchannel corresponding to the bit.

Optionally, the first request frame further includes one or more of the following information: a presence indication of the first indication information, first station type indication information, first sector indication information, and a first sector presence indication. The presence indication of the first indication information is set to a first value, to indicate that the first indication information is present in the first request frame. The first station type indication information indicates a type of the first device, and the type of the first device is a type of a station connected to an automated frequency coordination AFC system. The first sector indication information indicates a sector direction in which the first device is allowed to perform transmission and/or a sector direction in which the first device is forbidden to perform transmission in the first bandwidth. The first sector presence indication indicates whether the first sector indication information is present in the first request frame.

Optionally, the first sector indication information is a bitmap, and a bit in the first sector indication information indicates whether the first device is allowed to perform transmission in a sector direction corresponding to the bit. Alternatively, the first sector indication information includes one or more sector identifiers, and the first device is allowed or forbidden to perform transmission in sector directions respectively identified by the one or more sector identifiers.

Optionally, the first response frame includes one or more of the following information: second indication information, a presence indication of the second indication information, second station type indication information, second sector indication information, and a second sector presence indication. The second indication information indicates the subchannel on which transmission is allowed and/or the subchannel on which transmission is forbidden in the BSS bandwidth of the second device, or the second indication information indicates a subchannel on which transmission is allowed and/or a subchannel on which transmission is forbidden in a second bandwidth, and the second bandwidth is a maximum channel bandwidth supported by the second device or the preset bandwidth. The presence indication of the second indication information indicates whether the second indication information is present in the first response frame. The second station type indication information indicates a type of the second device, and the type of the second device is one of a standard-power access point type, a type of a station connected to the standard-power access point, the type of the station connected to the AFC system, and a type of a station connected to a low-power access point. The second sector indication information indicates a sector direction in which transmission is allowed and/or a sector direction in which transmission is forbidden in the BSS bandwidth of the second device, or the second sector indication information indicates a sector direction in which transmission is allowed and/or a sector direction in which transmission is forbidden in the second bandwidth, and the second bandwidth is the maximum channel bandwidth supported by the second device or the preset bandwidth. The second sector presence indication indicates whether the second sector indication information is present in the first response frame.

Optionally, the second sector indication information is a bitmap, and a bit in the second sector indication information indicates whether the second device is allowed to perform transmission in a sector direction corresponding to the bit. Alternatively, the second sector indication information includes one or more sector identifiers, and the second device is allowed or forbidden to perform transmission in sector directions respectively identified by the one or more sector identifiers.

Optionally, the association request frame includes one or more of the following information: the first indication information, the presence indication of the first indication information, the first station type indication information, the first sector indication information, and the first sector presence indication. The presence indication of the first indication information is set to a first value, to indicate that the first indication information is present in the association request frame. The first station type indication information indicates the type of the first device, and the type of the first device is the type of the station connected to the AFC system. The first sector indication information indicates a sector direction in which the first device is allowed to perform transmission and/or a sector direction in which the first device is forbidden to perform transmission in the first bandwidth. The first sector presence indication indicates whether the first sector indication information is present in the association request frame.

Optionally, the association response frame includes one or more of the following information: the second indication information, the presence indication of the second indication information, the second station type indication information, the second sector indication information, and the second sector presence indication. The second indication information indicates the subchannel on which transmission is allowed and/or the subchannel on which transmission is forbidden in the BSS bandwidth of the second device. The presence indication of the second indication information indicates whether the second indication information is present in the association response frame. The second station type indication information indicates the type of the second device, and the type of the second device is a standard-power access point type. The second sector indication information indicates a sector direction in which transmission is allowed and/or a sector direction in which transmission is forbidden in the BSS bandwidth of the second device. The second sector presence indication indicates whether the second sector indication information is present in the association response frame.

Optionally, the beacon frame further includes one or more of the following information second sector indication information and a second sector presence indication. The second sector indication information indicates the sector direction in which transmission is allowed and/or the sector direction in which transmission is forbidden in the BSS bandwidth of the second device. The second sector presence indication indicates whether the second sector indication information is present in the beacon frame.

It should be understood that the communication apparatus in this design may correspondingly execute the foregoing embodiments, and the operations or functions of the units in the communication apparatus are respectively used to implement corresponding operations of the first device in the foregoing embodiments. For brevity, details are not described herein again.

In another design, the communication apparatus may be a second device or a chip in the second device, for example, a Wi-Fi chip. The transceiver unit 11 is configured to receive a first request frame. The first request frame includes first indication information, the first indication information indicates a subchannel on which a first device is allowed to perform transmission and/or a subchannel on which the first device is forbidden to perform transmission in a first bandwidth, the first bandwidth is a maximum channel bandwidth supported by the first device or a preset bandwidth, the preset bandwidth is one of 320 MHz, 160 MHz, 80 MHz, 40 MHz, and 20 MHz, and the first device is a station. The transceiver unit 11 is further configured to send a first response frame. The second device is an access point or a station other than the first device.

Optionally, the processing unit 12 is configured to generate the first response frame.

Optionally, the first request frame is a probe request frame, and the first response frame is a probe response frame. The second device is an access point. The transceiver unit 11 is further configured to: receive an association request frame; and send an association response frame.

Optionally, the processing unit 12 is further configured to generate the association response frame.

Optionally, the first request frame is an association request frame, and the first response frame is an association response frame. The second device is an access point. The transceiver unit 11 is further configured to send a beacon frame. The beacon frame includes an EHT operation element, the EHT operation element includes a disabled subchannel bitmap, and the disabled subchannel bitmap indicates a subchannel on which transmission is allowed and a subchannel on which transmission is forbidden in a BSS bandwidth of the second device.

Optionally, the processing unit 12 is further configured to generate the beacon frame.

Optionally, the first request frame is a pairing request frame, and the first response frame is a pairing response frame. The second device is a station other than the first device.

Optionally, the first indication information is a bitmap, and a bit in the first indication information indicates whether the first device is allowed to perform transmission in a subchannel corresponding to the bit.

Optionally, the first request frame further includes one or more of the following information: a presence indication of the first indication information, first station type indication information, first sector indication information, and a first sector presence indication. The presence indication of the first indication information is set to a first value, to indicate that the first indication information is present in the first request frame. The first station type indication information indicates a type of the first device, and the type of the first device is a type of a station connected to an automated frequency coordination AFC system. The first sector indication information indicates a sector direction in which the first device is allowed to perform transmission and/or a sector direction in which the first device is forbidden to perform transmission in the first bandwidth. The first sector presence indication indicates whether the first sector indication information is present in the first request frame.

Optionally, the first sector indication information is a bitmap, and a bit in the first sector indication information indicates whether the first device is allowed to perform transmission in a sector direction corresponding to the bit. Alternatively, the first sector indication information includes one or more sector identifiers, and the first device is allowed or forbidden to perform transmission in sector directions respectively identified by the one or more sector identifiers.

Optionally, the first response frame includes one or more of the following information: second indication information, a presence indication of the second indication information, second station type indication information, second sector indication information, and a second sector presence indication. The second indication information indicates the subchannel on which transmission is allowed and/or the subchannel on which transmission is forbidden in the BSS bandwidth of the second device, or the second indication information indicates a subchannel on which transmission is allowed and/or a subchannel on which transmission is forbidden in a second bandwidth, and the second bandwidth is a maximum channel bandwidth supported by the second device or the preset bandwidth. The presence indication of the second indication information indicates whether the second indication information is present in the first response frame. The second station type indication information indicates a type of the second device, and the type of the second device is one of a standard-power access point type, a type of a station connected to the standard-power access point, the type of the station connected to the AFC system, and a type of a station connected to a low-power access point. The second sector indication information indicates a sector direction in which transmission is allowed and/or a sector direction in which transmission is forbidden in the BSS bandwidth of the second device, or the second sector indication information indicates a sector direction in which transmission is allowed and/or a sector direction in which transmission is forbidden in the second bandwidth, and the second bandwidth is the maximum channel bandwidth supported by the second device or the preset bandwidth. The second sector presence indication indicates whether the second sector indication information is present in the first response frame.

Optionally, the second sector indication information is a bitmap, and a bit in the second sector indication information indicates whether the second device is allowed to perform transmission in a sector direction corresponding to the bit. Alternatively, the second sector indication information includes one or more sector identifiers, and the second device is allowed or forbidden to perform transmission in sector directions respectively identified by the one or more sector identifiers.

Optionally, the association request frame includes one or more of the following information: the first indication information, the presence indication of the first indication information, the first station type indication information, the first sector indication information, and the first sector presence indication. The presence indication of the first indication information is set to a first value, to indicate that the first indication information is present in the association request frame. The first station type indication information indicates the type of the first device, and the type of the first device is the type of the station connected to the AFC system. The first sector indication information indicates a sector direction in which the first device is allowed to perform transmission and/or a sector direction in which the first device is forbidden to perform transmission in the first bandwidth. The first sector presence indication indicates whether the first sector indication information is present in the association request frame.

Optionally, the association response frame includes one or more of the following information: the second indication information, the presence indication of the second indication information, the second station type indication information, the second sector indication information, and the second sector presence indication. The second indication information indicates the subchannel on which transmission is allowed and/or the subchannel on which transmission is forbidden in the BSS bandwidth of the second device. The presence indication of the second indication information indicates whether the second indication information is present in the association response frame. The second station type indication information indicates the type of the second device, and the type of the second device is a standard-power access point type. The second sector indication information indicates a sector direction in which transmission is allowed and/or a sector direction in which transmission is forbidden in the BSS bandwidth of the second device. The second sector presence indication indicates whether the second sector indication information is present in the association response frame.

Optionally, the beacon frame further includes one or more of the following information second sector indication information and a second sector presence indication. The second sector indication information indicates the sector direction in which transmission is allowed and/or the sector direction in which transmission is forbidden in the BSS bandwidth of the second device. The second sector presence indication indicates whether the second sector indication information is present in the beacon frame.

It should be understood that the communication apparatus in this design may correspondingly execute the foregoing embodiments, and the operations or functions of the units in the communication apparatus are respectively used to implement corresponding operations of the second device in the foregoing embodiments. For brevity, details are not described herein again.

The foregoing describes the first device and the second device in embodiments of this application, and the following describes possible product forms of the first device and the second device. It should be understood that any product of any form that has a function of the first device or the second device in FIG. 14 falls within the protection scope of embodiments of this application. It should be further understood that the following descriptions are merely an example, and product forms of the first device and the second device in embodiments of this application are not limited thereto.

In a possible product form, the first device and the second device in embodiments of this application may be implemented by a general bus architecture.

For ease of description, FIG. 15 is a schematic diagram of a structure of a communication apparatus 1000 according to an embodiment of this application. The communication apparatus 1000 may be a first device, a second device, or a chip thereof. FIG. 15 shows only main components of the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control an entire communication apparatus, execute a software program, and process data of the software program. The memory 1003 is mainly configured to store the software program and data. The transceiver 1002 may include a control circuit and an antenna. The control circuit is mainly configured to: perform a conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data entered by a user, and output data to the user.

After the communication apparatus is powered on, the processor 1001 may read the software program in the memory 1003, interpret and execute instructions of the software program, and process data of the software program. When data needs to be transmitted in a wireless manner, the processor 1001 performs baseband processing on the to-be-transmitted data, and then outputs a baseband signal to a radio frequency circuit, and the radio frequency circuit performs radio frequency processing on the baseband signal, and then transmits a radio frequency signal to an outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of a processor that performs baseband processing. For example, in a distributed scenario, the radio frequency circuit and the antenna may be disposed remotely independent of the communication apparatus.

The processor 1001, the transceiver 1002, and the memory 1003 may be connected through a communication bus.

In a design, the communication apparatus 1000 may be configured to execute a function of a first device in Embodiment 1: The processor 1001 may be configured to generate a first request frame sent in step S101 in FIG. 4, and/or be configured to execute another process of a technology described in this specification. The transceiver 1002 may be configured to perform step S101 and step S104 in FIG. 4, and/or be configured to execute another process of the technology described in this specification.

In another design, the communication apparatus 1000 may be configured to execute a function of a second device in Embodiment 1: The processor 1001 may be configured to generate a first response frame sent in step S103 in FIG. 4, and/or be configured to execute another process of a technology described in this specification. The transceiver 1002 may be configured to perform step S102 and step S103 in FIG. 4, and/or be configured to execute another process of the technology described in this specification.

In a design, the communication apparatus 1000 may be configured to execute a function of a first device in Embodiment 2: The processor 1001 may be configured to generate an MPDU sent in step S201 in FIG. 11, and/or be configured to execute another process of a technology described in this specification. The transceiver 1002 may be configured to perform step S201 and step S204 in FIG. 11, and/or be configured to execute another process of the technology described in this specification.

In another design, the communication apparatus 1000 may be configured to execute a function of a second device in Embodiment 2: The processor 1001 may be configured to generate an acknowledgment frame sent in step S203 in FIG. 11, and/or be configured to execute another process of a technology described in this specification. The transceiver 1002 may be configured to perform step S202 and step S203 in FIG. 11, and/or be configured to execute another process of the technology described in this specification.

In a design, the communication apparatus 1000 may be configured to execute a function of a first device in Embodiment 3: The processor 1001 may be configured to perform step S304 in FIG. 13, and/or be configured to execute another process of a technology described in this specification. The transceiver 1002 may be configured to perform step S303 in FIG. 13, and/or be configured to execute another process of the technology described in this specification.

In another design, the communication apparatus 1000 may be configured to execute a function of a second device in Embodiment 3: The processor 1001 may be configured to perform step S301 in FIG. 13, and/or be configured to execute another process of a technology described in this specification. The transceiver 1002 may be configured to perform step S302 in FIG. 13, and/or be configured to execute another process of the technology described in this specification.

In any one of the foregoing designs, the processor 1001 may include a transceiver configured to implement a receiving function and a sending function. For example, the transceiver may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in any one of the method embodiments. The computer program may be built into the processor 1001. In this case, the processor 1001 may be implemented by hardware.

In an implementation, the communication apparatus 1000 may include a circuit, and the circuit may implement a sending, receiving, or communication function in the method embodiments. The processor and the transceiver described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the transceiver may be manufactured by using various IC technologies, for example, a complementary metal oxide semiconductor (complementary metal oxide semiconductor, CMOS), an N-type metal oxide semiconductor (N-type metal oxide semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by that in FIG. 15. The communication apparatus may be an independent device or may be part of a large device. For example, the communication apparatus may be:
(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device, or the like.

In a possible product form, the first device and the second device in embodiments of this application may be implemented by a general purpose processor.

The general purpose processor implementing the first device includes a processing circuit and an input/output interface that is internally connected to and communicates with the processing circuit.

In a design, the general purpose processor may be configured to execute a function of a first device in Embodiment 1. Specifically, the processing circuit may be configured to generate a first request frame sent in step S101 in FIG. 4, and/or be configured to execute another process of the technology described in this specification. The input/output interface may be configured to perform step S101 and step S104 in FIG. 4, and/or be configured to execute another process of the technology described in this specification.

In a design, the general purpose processor may be configured to execute a function of a first device in Embodiment 2. Specifically, the processing circuit may be configured to generate an MPDU sent in step S201 in FIG. 11, and/or be configured to execute another process of a technology described in this specification. The input/output interface may be configured to perform step 201 and step S204 in FIG. 11, and/or be configured to execute another process of the technology described in this specification.

In a design, the general purpose processor may be configured to execute a function of a first device in Embodiment 3. Specifically, the processing circuit may be configured to perform step S304 in FIG. 13, and/or be configured to execute another process of the technology described in this specification. The input/output interface may be configured to perform step S303 in FIG. 13, and/or be configured to execute another process of the technology described in this specification.

The general purpose processor implementing the second device includes a processing circuit and an input/output interface that is internally connected to and communicates with the processing circuit.

In a design, the general purpose processor may be configured to execute a function of a second device in Embodiment 1. Specifically, the processing circuit may be configured to generate a first response frame sent in step S103 in FIG. 4, and/or be configured to execute another process of a technology described in this specification. The input/output interface may be configured to perform step S102 and step S103 in FIG. 4, and/or be configured to execute another process of the technology described in this specification.

In a design, the general purpose processor may be configured to execute a function of a second device in Embodiment 2. Specifically, the processing circuit may be configured to generate an acknowledgment frame sent in step S203 in FIG. 11, and/or be configured to execute another process of a technology described in this specification. The input/output interface may be configured to perform step S202 and step S203 in FIG. 11, and/or be configured to execute another process of the technology described in this specification.

In a design, the general purpose processor may be configured to execute a function of a second device in Embodiment 3. Specifically, the processing circuit may be configured to perform step S301 in FIG. 13, and/or be configured to execute another process of the technology described in this specification. The input/output interface may be configured to perform step S302 in FIG. 13, and/or be configured to execute another process of the technology described in this specification.

It should be understood that the communication apparatuses in the foregoing various product forms have any function of the first device or the second device in any one of the foregoing embodiments. Details are not described herein again.

An embodiment of this application further provides a computer-readable storage medium. The computer-readable storage medium stores computer program code. When a processor executes the computer program code, an electronic device performs the method in any one of the foregoing embodiments.

An embodiment of this application further provides a computer program product. When the computer program product is run on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the receive circuit, so that the apparatus performs the method in any one of the foregoing embodiments.

An embodiment of this application further provides a wireless communication system, including a first device and a second device. The first device and the second device may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write the information into the storage medium. Certainly, the storage medium may be a component of the processor. The processor and the storage medium may be disposed in an ASIC. In addition, the ASIC may be located in a core network interface device. Certainly, the processor and the storage medium may also exist in the core network device as discrete components.

A person of skill in the art should be aware that in one or more of the foregoing examples, the functions described in this application may be implemented by using hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a common or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A channel indication method, comprising:
sending, by a first device, a first request frame, wherein the first request frame comprises first indication information, the first indication information indicates a subchannel on which the first device is allowed to perform transmission and/or a subchannel on which the first device is forbidden to perform transmission in a first bandwidth, the first bandwidth is a maximum channel bandwidth supported by the first device or a preset bandwidth, and the preset bandwidth is one of 320 MHz, 160 MHz, 80 MHz, 40 MHz, and 20 MHz; and
receiving, by the first device, a first response frame, wherein the first device is a station.

2. The method according to claim 1, wherein the first request frame is a probe request frame, and the first response frame is a probe response frame; and
after the receiving, by the first device, a first response frame, the method further comprises:
sending, by the first device, an association request frame; and
receiving, by the first device, an association response frame.

3. The method according to claim 1, wherein the first request frame is an association request frame, and the first response frame is an association response frame; and
before the sending, by a first device, a first request frame, the method further comprises:
receiving, by the first device, a beacon frame, wherein the beacon frame comprises an extremely high throughput EHT operation element, the EHT operation element comprises a disabled subchannel bitmap, the disabled subchannel bitmap indicates a subchannel on which transmission is allowed and a subchannel on which transmission is forbidden in a basic service set BSS bandwidth of a second device, and the second device is an access point.

4. The method according to claim 1, wherein the first request frame is a pairing request frame, and the first response frame is a pairing response frame.

5. A channel indication method, comprising:
receiving, by a second device, a first request frame, wherein the first request frame comprises first indication information, the first indication information indicates a subchannel on which a first device is allowed to perform transmission and/or a subchannel on which the first device is forbidden to perform transmission in a first bandwidth, the first bandwidth is a maximum channel bandwidth supported by the first device or a preset bandwidth, the preset bandwidth is one of 320 MHz, 160 MHz, 80 MHz, 40 MHz, and 20 MHz, and the first device is a station; and
sending, by the second device, a first response frame, wherein the second device is an access point or a station other than the first device.

6. The method according to claim 5, wherein the first request frame is a probe request frame, the first response frame is a probe response frame, and the second device is an access point; and
after the sending, by the second device, a first response frame, the method further comprises:
receiving, by the second device, an association request frame; and
sending, by the second device, an association response frame.

7. The method according to claim 5, wherein the first request frame is an association request frame, the first response frame is an association response frame, and the second device is an access point; and
before the receiving, by a second device, a first request frame, the method further comprises:
sending, by the second device, a beacon frame, wherein the beacon frame comprises an EHT operation element, the EHT operation element comprises a disabled subchannel bitmap, and the disabled subchannel bitmap indicates a subchannel on which transmission is allowed and a subchannel on which transmission is forbidden in a BSS bandwidth of the second device.

8. The method according to claim 5, wherein the first request frame is a pairing request frame, the first response frame is a pairing response frame, and the second device is a station other than the first device.

9. The method according to any one of claims 1 to 8, wherein the first indication information is a bitmap, and a bit in the first indication information indicates whether the first device is allowed to perform transmission on a subchannel corresponding to the bit.

10. The method according to any one of claims 1 to 9, wherein the first request frame further comprises one or more of the following information: a presence indication of the first indication information, first station type indication information, first sector indication information, and first sector presence indication;
the presence indication of the first indication information is set to a first value, to indicate that the first indication information is present in the first request frame;
the first station type indication information indicates a type of the first device, and the type of the first device is a type of a station connected to an automated frequency coordination AFC system;
the first sector indication information indicates a sector direction in which the first device is allowed to perform transmission and/or a sector direction in which the first device is forbidden to perform transmission in the first bandwidth; and
the first sector presence indication indicates whether the first sector indication information is present in the first request frame.

11. The method according to claim 10, wherein the first sector indication information is a bitmap, and a bit in the first sector indication information indicates whether the first device is allowed to perform transmission in a sector direction corresponding to the bit; or
the first sector indication information comprises one or more sector identifiers, and the first device is allowed or forbidden to perform transmission in sector directions respectively identified by the one or more sector identifiers.

12. The method according to any one of claims 1 to 11, wherein the first response frame comprises one or more of the following information: second indication information, a presence indication of the second indication information, second station type indication information, second sector indication information, and a second sector presence indication;
the second indication information indicates a subchannel on which transmission is allowed and/or a subchannel on which transmission is forbidden in the BSS bandwidth of the second device, or the second indication information indicates a subchannel on which transmission is allowed and/or a subchannel on which transmission is forbidden in a second bandwidth, and the second bandwidth is a maximum channel bandwidth supported by the second device or the preset bandwidth;
the presence indication of the second indication information indicates whether the second indication information is present in the first response frame;
the second station type indication information indicates a type of the second device, and the type of the second device is one of a standard-power access point type, a type of a station connected to the standard-power access point, the type of the station connected to the AFC system, and a type of a station connected to a low-power access point;
the second sector indication information indicates a sector direction in which transmission is allowed and/or a sector direction in which transmission is forbidden in the BSS bandwidth of the second device, or the second sector indication information indicates a sector direction in which transmission is allowed and/or a sector direction in which transmission is forbidden in the second bandwidth; and
the second sector presence indication indicates whether the second sector indication information is present in the first response frame.

13. The method according to claim 12, wherein the second sector indication information is a bitmap, and a bit in the second sector indication information indicates whether the second device is allowed to perform transmission in a sector direction corresponding to the bit; or
the second sector indication information comprises one or more sector identifiers, and the second device is allowed or forbidden to perform transmission in sector directions respectively identified by the one or more sector identifiers.

14. The method according to claim 2 or 6, wherein the association request frame comprises one or more of the following information: the first indication information, a presence indication of the first indication information, first station type indication information, first sector indication information, and a first sector presence indication;
the presence indication of the first indication information is set to a first value, to indicate that the first indication information is present in the association request frame;
the first station type indication information indicates a type of the first device, and the type of the first device is a type of a station connected to an AFC system;
the first sector indication information indicates a sector direction in which the first device is allowed to perform transmission and/or a sector direction in which the first device is forbidden to perform transmission in the first bandwidth; and
the first sector presence indication indicates whether the first sector indication information is present in the association request frame.

15. The method according to claim 2 or 6, wherein the association response frame comprises one or more of the following information: second indication information, a presence indication of the second indication information, second station type indication information, second sector indication information, and a second sector presence indication;
the second indication information indicates a subchannel on which transmission is allowed and/or a subchannel on which transmission is forbidden in a BSS bandwidth of the second device;
the presence indication of the second indication information indicates whether the second indication information is present in the association response frame;
the second station type indication information indicates a type of the second device, and the type of the second device is a standard-power access point type;
the second sector indication information indicates a sector direction in which transmission is allowed and/or a sector direction in which transmission is forbidden in the BSS bandwidth of the second device; and
the second sector presence indication indicates whether the second sector indication information is present in the association response frame.

16. The method according to claim 3 or 7, wherein the beacon frame further comprises one or more of the following information: second sector indication information and a second sector presence indication;
the second sector indication information indicates a sector direction in which transmission is allowed and/or a sector direction in which transmission is forbidden in the BSS bandwidth of the second device; and
the second sector presence indication indicates whether the second sector indication information is present in the beacon frame.

17. A communication apparatus, applied to a first device, comprising:
a transceiver unit, configured to send a first request frame, wherein the first request frame comprises first indication information, the first indication information indicates a subchannel on which the first device is allowed to perform transmission and/or a subchannel on which the first device is forbidden to perform transmission in a first bandwidth, the first bandwidth is a maximum channel bandwidth supported by the first device or a preset bandwidth, and the preset bandwidth is one of 320 MHz, 160 MHz, 80 MHz, 40 MHz, and 20 MHz, wherein
the transceiver unit is configured to receive a first response frame, wherein the first device is a station.

18. The communication apparatus according to claim 17, wherein the first request frame is a probe request frame, and the first response frame is a probe response frame; and
after the receiving, by the first device, a first response frame, the method further comprises:
sending, by the first device, an association request frame; and
receiving, by the first device, an association response frame.

19. The communication apparatus according to claim 17, wherein the first request frame is an association request frame, and the first response frame is an association response frame; and
before the sending, by a first device, a first request frame, the method further comprises:
receiving, by the first device, a beacon frame, wherein the beacon frame comprises an extremely high throughput EHT operation element, the EHT operation element comprises a disabled subchannel bitmap, the disabled subchannel bitmap indicates a subchannel on which transmission is allowed and a subchannel on which transmission is forbidden in a basic service set BSS bandwidth of a second device, and the second device is an access point.

20. The communication apparatus according to claim 17, wherein the first request frame is a pairing request frame, and the first response frame is a pairing response frame.

21. A communication apparatus, applied to a second device, comprising:
a transceiver unit, configured to receive a first request frame, wherein the first request frame comprises first indication information, the first indication information indicates a subchannel on which a first device is allowed to perform transmission and/or a subchannel on which the first device is forbidden to perform transmission in a first bandwidth, the first bandwidth is a maximum channel bandwidth supported by the first device or a preset bandwidth, the preset bandwidth is one of 320 MHz, 160 MHz, 80 MHz, 40 MHz, and 20 MHz, and the first device is a station, wherein
the transceiver unit is configured to send a first response frame, wherein the second device is an access point or a station other than the first device.

22. The communication apparatus according to claim 21, wherein the first request frame is a probe request frame, the first response frame is a probe response frame, and the second device is an access point; and
after the sending, by the second device, a first response frame, the method further comprises:
receiving, by the second device, an association request frame; and
sending, by the second device, an association response frame.

23. The communication apparatus according to claim 21, wherein the first request frame is an association request frame, the first response frame is an association response frame, and the second device is an access point; and
before the receiving, by a second device, a first request frame, the method further comprises:
sending, by the second device, a beacon frame, wherein the beacon frame comprises an EHT operation element, the EHT operation element comprises a disabled subchannel bitmap, and the disabled subchannel bitmap indicates a subchannel on which transmission is allowed and a subchannel on which transmission is forbidden in a BSS bandwidth of the second device.

24. The communication apparatus according to claim 21, wherein the first request frame is a pairing request frame, the first response frame is a pairing response frame, and the second device is a station other than the first device.

25. The communication apparatus according to any one of claims 17 to 24, wherein the first indication information is a bitmap, and a bit in the first indication information indicates whether the first device is allowed to perform transmission on a subchannel corresponding to the bit.

26. The communication apparatus according to any one of claims 17 to 25, wherein the first request frame further comprises one or more of the following information: a presence indication of the first indication information, first station type indication information, first sector indication information, and first sector presence indication;
the presence indication of the first indication information is set to a first value, to indicate that the first indication information is present in the first request frame;
the first station type indication information indicates a type of the first device, and the type of the first device is a type of a station connected to an automated frequency coordination AFC system;
the first sector indication information indicates a sector direction in which the first device is allowed to perform transmission and/or a sector direction in which the first device is forbidden to perform transmission in the first bandwidth; and
the first sector presence indication indicates whether the first sector indication information is present in the first request frame.

27. The communication apparatus according to claim 26, wherein the first sector indication information is a bitmap, and a bit in the first sector indication information indicates whether the first device is allowed to perform transmission in a sector direction corresponding to the bit; or
the first sector indication information comprises one or more sector identifiers, and the first device is allowed or forbidden to perform transmission in sector directions respectively identified by the one or more sector identifiers.

28. The communication apparatus according to any one of claims 17 to 27, wherein the first response frame comprises one or more of the following information: second indication information, a presence indication of the second indication information, second station type indication information, second sector indication information, and a second sector presence indication;
the second indication information indicates a subchannel on which transmission is allowed and/or a subchannel on which transmission is forbidden in the BSS bandwidth of the second device, or the second indication information indicates a subchannel on which transmission is allowed and/or a subchannel on which transmission is forbidden in a second bandwidth, and the second bandwidth is a maximum channel bandwidth supported by the second device or the preset bandwidth;
the presence indication of the second indication information indicates whether the second indication information is present in the first response frame;
the second station type indication information indicates a type of the second device, and the type of the second device is one of a standard-power access point type, a type of a station connected to the standard-power access point, the type of the station connected to the AFC system, and a type of a station connected to a low-power access point;
the second sector indication information indicates a sector direction in which transmission is allowed and/or a sector direction in which transmission is forbidden in the BSS bandwidth of the second device, or the second sector indication information indicates a sector direction in which transmission is allowed and/or a sector direction in which transmission is forbidden in the second bandwidth; and
the second sector presence indication indicates whether the second sector indication information is present in the first response frame.

29. The communication apparatus according to claim 28, wherein the second sector indication information is a bitmap, and a bit in the second sector indication information indicates whether the second device is allowed to perform transmission in a sector direction corresponding to the bit; or
the second sector indication information comprises one or more sector identifiers, and the second device is allowed or forbidden to perform transmission in sector directions respectively identified by the one or more sector identifiers.

30. The communication apparatus according to claim 18 or 22, wherein the association request frame comprises one or more of the following information: the first indication information, a presence indication of the first indication information, first station type indication information, first sector indication information, and a first sector presence indication;
the presence indication of the first indication information is set to a first value, to indicate that the first indication information is present in the association request frame;
the first station type indication information indicates a type of the first device, and the type of the first device is a type of a station connected to an AFC system;
the first sector indication information indicates a sector direction in which the first device is allowed to perform transmission and/or a sector direction in which the first device is forbidden to perform transmission in the first bandwidth; and
the first sector presence indication indicates whether the first sector indication information is present in the association request frame.

31. The communication apparatus according to claim 18 or 22, wherein the association response frame comprises one or more of the following information: second indication information, a presence indication of the second indication information, second station type indication information, second sector indication information, and a second sector presence indication;
the second indication information indicates a subchannel on which transmission is allowed and/or a subchannel on which transmission is forbidden in a BSS bandwidth of the second device;
the presence indication of the second indication information indicates whether the second indication information is present in the association response frame;
the second station type indication information indicates a type of the second device, and the type of the second device is a standard-power access point type;
the second sector indication information indicates a sector direction in which transmission is allowed and/or a sector direction in which transmission is forbidden in the BSS bandwidth of the second device; and
the second sector presence indication indicates whether the second sector indication information is present in the association response frame.

32. The communication apparatus according to claim 19 or 23, wherein the beacon frame further comprises one or more of the following information: second sector indication information and a second sector presence indication;
the second sector indication information indicates a sector direction in which transmission is allowed and/or a sector direction in which transmission is forbidden in the BSS bandwidth of the second device; and
the second sector presence indication indicates whether the second sector indication information is present in the beacon frame.

33. A communication apparatus, comprising a processor and a transceiver, wherein the transceiver is configured to receive and send a frame, and when the processor runs program instructions, the communication apparatus is enabled to perform the method according to any one of claims 1 to 16.

34. A computer-readable storage medium, wherein the computer-readable storage medium stores program instructions, and when the program instructions are run on a computer, the computer is enabled to perform the method according to any one of claims 1 to 16.

35. A computer program product comprising program instructions, wherein when the program instructions are run on a computer, the computer is enabled to perform the method according to any one of claims 1 to 16.

36. A chip, comprising an input/output interface and a processing circuit, wherein when the processing circuit runs program instructions, the chip is enabled to perform the method according to any one of claims 1 to 16.
